# EUROPEAN PATENT SPECIFICATION

(11) **EP 4 481 644 B1**
(45) Date of publication and mention of the grant of the patent: **04.11.2026**
(21) Application number: 24178735.7
(22) Date of filing: 29.05.2024
(51) Int. Cl.: G06Q 10/02, G06Q 10/0631, G06Q 50/40

(54) **SUSTAINABLE VEHICLE FUEL PLATFORM**
NACHHALTIGE FAHRZEUGKRAFTSTOFFPLATTFORM
PLATE-FORME DE CARBURANT DE VÉHICULE DURABLE

(30) Priority: 23.06.2023 IN 202311042135; 16.08.2023 US 202318450474
(43) Date of publication of application: 25.12.2024
(73) Proprietor: Honeywell International Inc., Charlotte, NC 28202 (US)
(72) Inventor: VANGAVETI, Dhanunjaya Kumar, Charlotte, 28202 (US)
(74) Representative: Haseltine Lake Kempner LLP

(56) References cited:
- US-A1- 2011 137 470
- US-A1- 2017 087 999
- US-A1- 2021 312 521

## Description

### TECHNICAL FIELD

The present disclosure generally relates to vehicle management. More specifically, the present disclosure is related to a cloud-based sustainable vehicle fuel (SVF) platform configured to facilitate the aggregation, generation, and optimization of SVF data related to one or more SVF suppliers for one or more aerial vehicles configured to use SVF as a power source.

### BACKGROUND

Many industries including aerospace, logistics, transportation, and/or shipping industries are experiencing an aggressive push towards utilizing more fuel-efficient and environmentally-safe vehicles for everyday business operations. As more vehicles are being configured to utilize sustainable vehicle fuel (SVF), more SVF suppliers are coming online to serve the growing demands for SVF in these industries. However, because the SVF landscape is evolving so quickly, there are inherent problems in the centralized aggregation, generation, and distribution of data related to SVF. Furthermore, as there are many vehicles with various respective capabilities deployed for various tasks, it is necessary to identify, locate, and obtain the proper type of SVF configured in an optimal mixing ratio so as to suit both the vehicle and the respective tasks assigned to the vehicle.

Inventors have discovered problems with current implementations of vehicle management techniques related to various vehicle types (e.g., aerial vehicles), especially related to the aggregation, generation, and distribution of data related to SVF. Through applied effort, ingenuity, and innovation, the inventors have solved many of these problems by developing the solutions embodied in the present disclosure, the details of which are described further herein.
US 2011/137470 discloses a method and a system for vehicle refueling.

### BRIEF SUMMARY

In general, embodiments of the present disclosure herein provide a sustainable vehicle fuel (SVF) platform configured to facilitate the aggregation, generation, and/or optimization of SVF data related to one or more SVF suppliers for one or more aerial vehicles configured to use SVF as a power source. Other implementations will be, or will become, apparent to one with skill in the art upon examination of the following figures and detailed description. It is intended that all such additional implementations be included within this description be within the scope of the disclosure and be protected within the scope of the following claims.

In accordance with a first aspect of the present disclosure, a computer-implemented method for executing a plurality of SVF operations related to the SVF platform is provided. The computer-implemented method is performable by one or more specially configured computing device(s) embodied in hardware, software, firmware, and/or any combination thereof, for example as described herein. In one example embodiment, the example computer-implemented method includes requesting one or more portions of SVF supplier source data from one or more SVF suppliers. The example computer-implemented method also includes aggregating the one or more portions of SVF supplier source data. The example computer-implemented method also includes receiving a request to display a current SVF availability, where the request to display the current SVF availability is associated with a user profile associated with a vehicle, where the request to display the current SVF availability comprises one or more portions of data related to a trip plan. The example computer-implemented method also includes, in response to receiving the request to display the current SVF availability, causing rendering of the current SVF availability via an interactive SVF dashboard, where the current SVF availability is based at least in part on the one or more portions of SVF supplier source data.

The example computer-implemented method also includes receiving a request to schedule an SVF fueling reservation, where the request to schedule the SVF fueling reservation is associated with the user profile associated with the vehicle. The example computer-implemented method also includes, in response to receiving the request to schedule the SVF fueling reservation, causing transmission of one or more portions of data related to the request to schedule the SVF fueling reservation to one or more computing devices associated with a respective SVF supplier of the one or more SVF suppliers. The example computer-implemented method also includes receiving a confirmation of the SVF fueling reservation from the respective SVF supplier of the one or more SVF suppliers. The example computer-implemented method also includes causing rendering of the confirmation of the SVF fueling reservation via the interactive SVF dashboard.

The example computer-implemented method also includes generating one or more portions of user profile data associated with the user profile associated with the vehicle, where the one or more portions of user profile data comprise data related to at least one of a user search history related to one or more searches executed via the interactive SVF dashboard, a user purchase history associated with one or more purchases of SVF made by the user profile, a user trip history associated with one or more prior trip plans executed by the user profile. The example computer-implemented method also includes causing storage of at least the user purchase history associated with the one or more portions of user profile data in a blockchain-enabled datastore.

The example computer-implemented method also includes determining, via an SVF optimization model, a suggested SVF mixing ratio, where the suggested SVF mixing ratio is generated based in part on the trip plan and the one or more portions of user profile data. The example computer-implemented method also includes determining, via the SVF optimization model, a suggested travel hub offering SVF at a lowest cost relative to one or more alternative travel hubs offering SVF, where the suggested travel hub is determined based in part on the trip plan and the one or more portions of user profile data. The example computer-implemented method also includes determining, via the SVF optimization model and based in part on the one or more portions of user profile data, at least one of a carbon offset or a carbon credit associated with the user profile, where determining the at least one of the carbon offset or the carbon credit comprises verifying the user purchase history stored on the blockchain-enabled datastore. The example computer-implemented method also includes causing rendering of least one of the suggested SVF mixing ratio, the suggested travel hub, the at least one of the carbon offset or the carbon credit, or the one or more portions of user profile data via the interactive SVF dashboard.

The example computer-implemented method further includes parsing at least one of one or more Extensible Markup Language (XML) documents, one or more application programming interface data query results, one or more spreadsheets, or one or more emails associated with the one or more SVF suppliers. The example computer-implemented method also includes configuring the one or more portions of SVF supplier source data to be displayed via the interactive SVF dashboard, where the interactive SVF dashboard is associated with a respective electronic display associated with one or more user computing devices.

The example computer-implemented method further includes where the request to display the current SVF availability is generated based on an interaction with the interactive SVF dashboard.

The example computer-implemented method further includes where the current SVF availability comprises data related to at least one of one or more available SVF types associated with the one or more respective SVF suppliers located at one or more travel hubs associated with the trip plan, one or more SVF quantities associated with the one or more respective available SVF types, a current price associated with the one or more respective available SVF types, an SVF mixing ratio associated with the one or more respective available SVF types, or logistical information related to the one or more respective travel hubs associated with the trip plan.

The example computer-implemented method further includes where the request to schedule the SVF fueling reservation is based in part on the current SVF availability, and where the request to schedule the SVF fueling reservation is generated based on an interaction with the interactive SVF dashboard.

The example computer-implemented method further includes where the one or more searches executed via the interactive SVF dashboard are related to SVF.

The example computer-implemented method further includes where the user purchase history comprises data related to at least one of one or more purchased SVF quantities, one or more purchased SVF types, one or more purchased SVF mixing ratios, one or more previously patronized SVF suppliers, or one or more previously visited travel hubs associated with the one or more previously patronized SVF suppliers.

The example computer-implemented method further includes where the user trip history comprises data related to at least one of one or more trip routes taken during execution of the one or more prior trip plans, one or more SVP types used during the execution of the one or more prior trip plans, or one or more SVF mixing ratios used during the execution of the one or more prior trip plans.

The example computer-implemented method further includes where the suggested SVF mixing ratio is based in part on at least one of an emissions optimization, a cost optimization, or a vehicle efficiency optimization.

The example computer-implemented method further includes where the at least one of the carbon offset or the carbon credit are associated with a measurable amount of carbon emissions removed from atmosphere by using one or more purchased SVF quantities in the vehicle.

The example computer-implemented method further includes generating, based at least in part on the one or more portions of SVF supplier source data, one or more notifications related to one or more SVF offers associated with the one or more SVF suppliers. The example computer-implemented method also includes causing transmission of the one or more notifications to one or more user computing devices associated with the user profile associated with the vehicle.

The example computer-implemented method further includes causing publication of the at least one of the carbon offset or the carbon credit associated with the user profile.

In accordance with a second aspect of the disclosure, an apparatus for executing a plurality of SVF operations related to the SVF platform is provided. In one example embodiment, the apparatus includes at least one processor and at least one memory having computer-coded instructions stored thereon, where the computer-coded instructions in execution with the at least one processor causes the apparatus to perform any one of the example computer-implemented methods described herein. In a second example embodiment apparatus, the apparatus includes means for performing each step of any one of the example computer-implemented methods described herein.

In accordance with a third aspect of the disclosure, a computer program product for executing a plurality of SVF operations related to the SVF platform is provided. In one example embodiment computer program product, the computer program product includes at least one non-transitory computer-readable storage medium having computer program code stored thereon that, in execution with at least one processor, configures the computer program product for performing any one of the example computer-implemented methods described herein.

The above summary is provided merely for the purpose of summarizing some example embodiments to provide a basic understanding of some aspects of the present disclosure. It will be appreciated that the scope of the present disclosure encompasses many potential embodiments in addition to those here summarized, some of which will be further described below. Other features, aspects, and advantages of the subject will become apparent from the description, the drawings, and the claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an exemplary sustainable vehicle fuel (SVF) platform configured in accordance with some embodiments discussed herein;
FIG. 2 illustrates an exemplary user computing device system in accordance with some embodiments discussed herein;
FIG. 3 illustrates an exemplary user computing device in accordance with some embodiments discussed herein;
FIG. 4 illustrates an exemplary system associated with an interactive SVF dashboard, in accordance with some embodiments discussed herein;
FIG(s). 5A-B illustrate a process flow diagram related to an example method for executing a plurality of SVF operations related to the SVF platform in accordance with some embodiments discussed herein; and
FIG. 6 illustrates a process flow diagram related to an example method for aggregating one or more portions of SVF supplier source data in accordance with some embodiments discussed herein.

### DETAILED DESCRIPTION

Some embodiments of the present disclosure will now be described more fully hereinafter with reference to the accompanying drawings, in which some, but not all embodiments are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

### OVERVIEW

Entities associated with the aerospace, logistics, transportation, and/or shipping industries, whether they be large enterprises, small businesses, and/or individual operators, are demanding more fuel-efficient and environmentally-safe fuel options for powering the vehicles comprised in their fleets. For example, as more aerial vehicles are being configured to utilize sustainable vehicle fuel (SVF), more SVF suppliers are coming online to serve the growing demands for SVF in the aerospace industry. However, because the SVF landscape is evolving so quickly, there are inherent problems in the centralized aggregation, generation, and distribution of data related to SVF. Furthermore, as there are many vehicle types with various respective capabilities deployed for various tasks, it is necessary to identify, locate, and obtain the proper type of SVF for the vehicle types. Moreover, it is necessary to determine an optimal SVF mixing ratio to suit both the vehicle type and/or a respective trip plan associated with the vehicle.

Embodiments of the present disclosure provide an SVF platform configured to facilitate, for one or more user profiles associated with the SVF platform, the execution of one or more SVF operations related to, but not limited by, aggregating SVF supplier source data, determining SVF availability based at least in part on a trip plan related to a vehicle associated with e particular user profile, determining optimal SVF mixing ratios for a vehicle related to a particular user profile, determining one or more carbon offsets and/or carbon credits generated by a particular user profile by using SVF in one or more vehicles, publishing the one or more carbon offsets and/or carbon credits, and/or facilitating an SVF fueling reservation for a vehicle associated with a particular user profile at a particular travel hub.

In this regard, the SVF platform is comprised of several distributed systems, computing devices, datastores, and/or the like configured to execute the one or more SVF operations. For example, according to various embodiments of the present disclosure, the SVF platform embodies, or is integrated with, an SVF system, one or more user computing devices associated with one or more user profiles, one or more vehicles associated with the one or more user profiles (e.g., one or more aerial vehicles), one or more SVF suppliers, one or more SVF databases, and/or one or more communication networks.

The SVF system associated with the SVF platform is configured to receive and/or aggregate one or more portions of SVF supplier source data associated with one or more SVF suppliers. As there is no centralized organization dedicated to standardizing SVF suppliers and/or the source data related to the SVF suppliers, the SVF may receive SVF supplier source data configured in one or more data formats. As such, the SVF system is configured to parse, collate, organize, aggregate, format, and/or otherwise manage SVF supplier source data that is configured in one or more data formats including, but not limited to, one or more Extensible Markup Language (XML) documents, one or more application programming interface (API) data query results, one or more data objects (e.g., one or more data objects configured in a JavaScript Object Notation (JSON) format), one or more spreadsheets, and/or one or more emails associated with the one or more SVF suppliers.

The SVF system comprises, among other components, an SVF optimization model. The SVF optimization model is a machine learning (ML) model that is configured to determine at least one of one or more suggested SVF mixing ratios for a vehicle related to a particular user profile, one or more suggested travel hubs for the vehicle related to the particular user profile, and/or one or more of a carbon credit or carbon offset associated with the particular user profile. The SVF optimization model can take as input at least one of one or more portions of user profile data related to the particular user profile (e.g., a user purchase history), one or more trip plans associated with the particular user profile, one or more vehicle operation constraints associated with the vehicle related to the particular user profile, one or more SVF suppliers, one or more portions of SVF supplier source data, one or more travel hubs, and/or the like. In various embodiments, the SVF optimization model can determine the one or more carbon credits and/or carbon offsets associated with the particular user profile based on user purchase history stored in a blockchain-enabled database.

The SVF system, in some contexts, receives one or more requests via a communications network. The one or more requests may include, but are not limited to, a request to aggregate SVF supplier source data from one or more respective SVF suppliers, a request to generate and/or render a current SVF availability associated with one or more SVF suppliers, a request to suggest an SVF mixing ratio for a particular vehicle related to a user profile, a request to schedule an SVF fueling reservation for the particular vehicle related to the user profile, a request to generate user profile data for the user profile, a request to suggest one or more travel hubs offering SVF based on a relative cost of the SVF and/or the location of the travel hub, and/or a request to generate and/or cause rendering of an interactive SVF dashboard on one or more computing devices.

Additionally, the SVF system is configured to log, store, transmit, and/or otherwise manage one or more portions of data related to one or more vehicles, one or more user profiles, one or more travel hubs, and/or one or more SVF suppliers associated with the SVF platform. For example, the SVF system is configured to cause storage of one or more portions of SVF data, SVF supplier source data, user profile data, vehicle data, travel hub data, SVF fueling reservation data, and/or the like in an SVF database associated with the SVF platform. Furthermore, the SVF system is configured to generate and/or cause the rendering of an interactive SVF dashboard on one or more computing devices, where the interactive SVF dashboard is generated based at least in part on the one or more portions of the SVF data, the SVF supplier source data, the user profile data, the vehicle data, the travel hub data, the SVF fueling reservation data, and/or the like.

In various contexts, the interactive SVF dashboard can be used to facilitate and/or cause initiation of one or more SVF operations related to the SVF platform. As a non-limiting example, an interactive SVF dashboard rendered on a user computing device associated with a particular user profile can be used to make an SVF fueling reservation with a particular SVF supplier located at a respective travel hub based in part on a trip plan associated with a vehicle (e.g., an aerial vehicle) related to the particular user profile. Other non-limiting examples of the various SVF operations the interactive SVF dashboard can facilitate include, but are not limited by, executing one or more SVF searches, executing one or more SVF purchases, generating an interactive map based on SVF supplier source data, and/or rendering one or more portions of user profile data.

In one or more embodiments, the user profile data associated with a particular user profile can comprise, but is not limited to, data related to at least one of a user search history related to one or more searches executed via the interactive SVF dashboard associated with the SVF system, a user purchase history associated with one or more purchases of SVF made by the user profile, and/or a user trip history associated with one or more prior trip plans executed by a vehicle associated with the user profile.

The user search history comprises data related to one or more searches executed via an interactive SVF dashboard associated with the SVF system, where the one or more searches executed via the interactive SVF dashboard are related to SVF. The user purchase history comprises data related to at least one of one or more purchased SVF quantities, one or more purchased SVF types, one or more purchased SVF mixing ratios, one or more previously patronized SVF suppliers, and/or one or more previously visited travel hubs associated with the one or more previously patronized SVF suppliers. The user trip history comprises data related to at least one of one or more trip routes taken during execution of the one or more prior trip plans, one or more SVP types used during the execution of the one or more prior trip plans, and/or one or more SVF mixing ratios used during the execution of the one or more prior trip plans.

In one or more embodiments, the SVF system can cause storage of one or more portions of user profile data related to the one or more user profiles associated with the SVF platform in a blockchain-enabled database. The SVF system can verify (e.g., by way of the SVF optimization model) one or more SVF purchases related to a particular user profile that have been stored in the blockchain-enabled database in order to determine the one or more carbon offsets and/or carbon credits generated by the user profile for using SVF one or more vehicles associated with the user profile.

### DEFINITIONS

"Sustainable vehicle fuel (SVF)" refers to a sustainable alternative to fossil-based vehicle fuels. The are various types of SVF including, but not limited to, biofuels created from various processes and biological sources such as hydro-processed esters and fatty acids (HEFA), alcohols to jet (Atj), biomass gasification + Fischer-Tropsch (gas-FT), and power-to-liquid (PtL). HEFA utilizes feedstocks that include waste and residue fats (e.g., vegetable oils, used cooking oils, etc.) and, in some cases, intentionally grown plants (e.g., camelina and/or jatropha). Atj is produced from a fermentation of process lignocellulosic feedstocks as well as sugar/starch crops. Gas-FT, also known as biogas or syngas, is obtained from the gasification of feedstock and processed within an FT reactor. PtL utilizes a process of using water and electricity in an electrolyzer to produce hydrogen which can be synthesized with CO₂ into syngas. It is to be appreciated that the types of SVF provided above are listed for example purposes and that embodiments of the present disclosure are not limited by the SVF types described herein.

In various contexts, the various SVF types can be mixed with traditional, fossil-based vehicle fuels in order to derive a particular SVF mixing ratio associated with a specific percentage of SVF and a specific percentage of traditional, fossil-based vehicle fuel. Various SVF mixing ratios can be used for various respective purposes, and a particular SVF mixing ratio can be used in a particular vehicle associated with a respective user profile to achieve a desired optimization of the particular vehicle associated with the respective profile. For example, various SVF mixing ratios can be used to optimize at least one or more of vehicle emissions and/or SVF cost. In some contexts, a particular SVF mixing ratio may be chosen for a particular vehicle based on a trip plan associated with the particular vehicle.

"SVF platform" refers to a distributed platform configured to monitor, retrieve, aggregate, collate, generate, and/or otherwise manage data related to SVF, one or more SVF suppliers, one or more SVF consumers, and/or one or more travel hubs. An SVF platform, in some contexts, is associated with one or more enterprises such as, for example, a logistics enterprise, a delivery and shipment enterprise, a commercial airline, an aerial delivery enterprise, an urban air mobility (UAM) enterprise, an advanced air mobility (AAM) enterprise, a military enterprise, and/or the like that manages and/or deploys a fleet of vehicles. The SVF platform in some contexts includes and/or integrates with one or more systems, computing devices, services, and/or data stores. For example, the SVF platform can interface with one or more SVF supplier systems, travel hub management systems, environment data systems, UAM systems, SVF databases, and/or the like.

"SVF system" refers to computing hardware, software, firmware, and/or a combination thereof, that generates, embodies, integrates with, and/or otherwise manages an application instance configured to integrate with one or more computing systems and/or apparatuses associated with a user profile related to a vehicle associated with the SVF platform. For example, the SVF system is configured to generate and/or cause rendering of an interactive SVF dashboard for one or more user computing devices related to one or more user profiles associated with the SVF platform. The SVF system comprises, among other components, an SVF optimization model configured to generate one or more suggested SVF mixing ratios for a particular vehicle associated with a user profile based on at least one of a cost optimization, an emissions optimization, a user purchase history, a vehicle type, and/or a trip plan associated with the vehicle. The SVF optimization model is also configured to determine an amount of carbon offsets and/or carbon credits generated by a user profile for using SVF in one or more vehicles associated with the user profile.

"SVF supplier" refers to an enterprise associated with the generation, distribution, and/or sale of one or more types SVF configured in various respective SVF mixing ratios. In various contexts, an SVF supplier may be affiliated with a particular travel hub, such as a particular airport or a particular fueling station.

"SVF supplier source data" refers to any data related to a particular SVF supplier. In various contexts, SVF supplier source data may comprise one or more portions of data related to, but not limited by, one or more types of SVF, one or more costs associated with the one or more respective types of SVF, one or more available quantities associated with the one or more respective types of SVF, one or more available quantities of SVF associated with a particular travel hub, one or more SVF mixing ratios offered by the SVF supplier, and/or one or more SVF fueling reservation vacancies associated with the SVF supplier, where the one or more SVF fueling reservation vacancies may correspond to one or more respective travel hubs. SVF supplier source data can be configured in one or more data formats including, but not limited to, one or more Extensible Markup Language (XML) documents, one or more application programming interface (API) data query results, one or more data objects (e.g., one or more data objects configured in a JavaScript Object Notation (JSON) format), one or more spreadsheets, and/or one or more emails associated with the one or more SVF suppliers.

"SVF optimization model" refers to a machine learning (ML) model associated with the SVF platform that is configured to determine at least one of one or more suggested SVF mixing ratios for a vehicle related to a particular user profile, one or more suggested travel hubs for the vehicle related to the particular user profile, and/or one or more of a carbon credit or carbon offset associated with the particular user profile. The SVF optimization model can take as input at least one of one or more portions of data related to the particular user profile (e.g., a user purchase history), one or more trip plans associated with the particular user profile, one or more vehicle operation constraints associated with the vehicle related to the particular user profile, one or more SVF suppliers, one or more portions of SVF supplier source data, one or more travel hubs, and/or the like.

In various embodiments, the SVF optimization model is configured as a deep learning neural network such as an artificial neural network (ANN), recurrent neural network (RNN), convolutional neural network (CNN), and/or any other specialized deep learning neural network. In some contexts, the SVF optimization model can be embodied by, or integrated with, the SVF system associated with the SVF platform.

A SVF optimization model can be iteratively retrained and/or otherwise updated based on data related to one or more vehicles, one or more profiles, and/or one or more SVP suppliers, associated with the SVF platform. For example, the federated learning model in some contexts is trained and/or retrained based in part on one or more portions of user profile data comprising a user search history, a user purchase history, and/or a user trip history associated with one or more user profiles associated with the SVF platform. In this way, the SVF optimization model is constantly updated based on a global corpus of SVF data related to many user profiles and/or vehicles associated with many respective enterprises. As such, the SVF optimization model is consistently improving in both accuracy and efficiency when determining the at least one of the one or more suggested SVF mixing ratios for a vehicle related to a particular user profile, the one or more suggested travel hubs for the vehicle related to the particular user profile, and/or the one or more of a carbon credit or carbon offset associated with the particular user profile. In certain embodiments, the federated learning model is retrained and/or otherwise updated on a predefined schedule such as, for example, daily, weekly, bi-weekly, monthly, and/or the like.

"Carbon credit," also known as carbon allowances, refers to emission credit given to a particular entity (e.g., an enterprise, business, and/or person) by a governing body. A carbon credit grants the entity permission to generate one ton of CO₂ emissions. In some contexts, entities with excess carbon credits can sell the carbon credits to other entities. Traditionally, carbon credits are issued by national or international governmental organizations via various legislations such as, for example, the Kyoto Protocol of 1997 and the Paris Agreement of 2015 which created the first international carbon markets. In various embodiments, the SVF optimization model can determine how many carbon credits have been earned by a particular entity related to a user profile associated with the SVF platform based on a user purchase history (e.g., an SVF purchase history) associated with the user profile.

"Carbon offset" refers to a tradeable commodity generated by a first entity (e.g., an enterprise, business, and/or person) for removing a unit of carbon (e.g., one ton of CO₂) from the atmosphere as part of normal business operations (e.g., by using SVF in one or more vehicles associated with the first entity). In various contexts, a second entity can then purchase one or more carbon offsets from the first entity in order to reduce a carbon footprint associated with the second entity. In various embodiments, the SVF optimization model can determine how many carbon offsets have been earned by a particular entity related to a user profile associated with the SVF platform based on a user purchase history (e.g., an SVF purchase history) associated with the user profile.

"User profile data" refers to one or more portions data associated with a user profile associated with a vehicle, where the one or more portions of user profile data comprise data related to at least one of a user search history related to one or more searches executed via an interactive SVF dashboard associated with the SVF system, a user purchase history associated with one or more purchases of SVF made by the user profile, and/or a user trip history associated with one or more prior trip plans executed by a vehicle associated with the user profile.

The user search history comprises data related to one or more searches executed via an interactive SVF dashboard associated with the SVF system, where the one or more searches executed via the interactive SVF dashboard are related to SVF. The user purchase history comprises data related to at least one of one or more purchased SVF quantities, one or more purchased SVF types, one or more purchased SVF mixing ratios, one or more previously patronized SVF suppliers, and/or one or more previously visited travel hubs associated with the one or more previously patronized SVF suppliers. The user trip history comprises data related to at least one of one or more trip routes taken during execution of the one or more prior trip plans, one or more SVP types used during the execution of the one or more prior trip plans executed by a vehicle associated with the user profile, and/or one or more SVF mixing ratios used during the execution of the one or more prior trip plans.

"Travel hub" refers to transportation and/or logistics hub that is configured to serve one or more inbound and/or outbound vehicles. Non-limiting examples of travel hubs include airports, vertiports, helipads, hangars, vehicle fueling stations, vehicle pools, service stations, vehicle maintenance facilities, vehicle manufacturing facilities, vehicle sales facilities, and/or the like. A travel hub may embody, integrate with, and/or host one or more SVF suppliers such that the one or more SVF suppliers can supply SVF to one or more vehicles traveling to and/or from the travel hub.

"Trip plan" refers to one or more portions of data related to, but not limited by, at least one or more of one or more mission goals, flight plans, flight legs, arrival locations, departure locations, destinations, waypoints, navigation routes, vehicle operation constraints, travel hub information, SVF data, and/or the like related to a particular vehicle related to a particular user profile associated with the SVF platform.

"Vehicle operation constraints" refer to, but are not limited to, constraints related to the configuration of one or more vehicle systems associated with the vehicle, constraints related to a particular trip plan, SVF mixing ratio constraints, fuel emissions constraints, power consumption constraints (e.g., battery and/or fuel consumption thresholds), specific vehicle constraints (e.g., performance capabilities associated with one or more vehicle systems of the vehicle), environmental constraints (e.g., regulations related to operating the vehicle in an urban environment), and/or the like.

"Vehicle" refers to any manned or unmanned vehicle that can be configured to be powered, at least in part, by SVF. Non-limiting examples of a vehicle include an aerial vehicle, an automobile, a truck, a tractor trailer, a watercraft, and/or any other type of vehicle that can be powered, at least in part, by SVF.

"Aerial vehicle" refers to any manned or unmanned vehicle capable of air travel that can be configured to be powered, at least in part, by SVF. Non-limiting examples of an aerial vehicle include a passenger airplane, a helicopter, an unmanned aerial vehicle, a vertical takeoff or landing (VTOL) aircraft, a jet, a drone, or a quadcopter. At least some aerial vehicles are controllable by systems onboard the aerial vehicle. At least some aerial vehicles are controllable by systems external from the aerial vehicle including, and without limitation, remote control systems, ground system, and centralized control systems.

"Computing device" refers to any computer, processor, circuitry, and/or other executor of computer instructions that is embodied in hardware, software, firmware, and/or any combination thereof. Non-limiting examples of a computing device include a computer, a processor, an application-specific integrated circuit, a field-programmable gate array, a personal computer, a smart phone, a laptop, a fixed terminal, a server, a networking device, and a virtual machine.

"User computing device" refers to a computing device associated with a person, company, or other organizational structure that controls one or more systems. In some embodiments, a user computing device is associated with particular administrative credentials that define access to operation via a particular system.

"Executable code" refers to a portion of computer program code stored in one or a plurality of locations that is executed and/or executable via one or more computing devices embodied in hardware, software, firmware, and/or any combination thereof. Executable code defines at least one particular operation to be executed by one or more computing devices. In some embodiments, a memory, storage, and/or other computing device includes and/or otherwise is structured to define any amount of executable code (e.g., a portion of executable code associated with a first operation and a portion of executable code associated with a second operation). Alternatively or additionally, in some embodiments, executable code is embodied by separate computing devices (e.g., a first data store embodying first portion of executable code and a second data store embodying a second portion executable code).

"Datastore," "database," "data lake," and/or the like refer to any type of non-transitory computer-readable storage medium. Non-limiting examples of a datastore, database, and/or data lake include hardware, software, firmware, and/or a combination thereof capable of storing, recording, updating, retrieving and/or deleting computer-readable data and information. In various embodiments, a datastore, database, and/or data lake in some contexts is a cloud-based storage system accessible via a communications network by one or more components of the various embodiments of the present disclosure.

"Blockchain-enabled database" or "blockchain-enabled datastore" refers to a secure, decentralized database configured based on blockchain technology. A blockchain can be understood as a digital ledger that stores data (e.g., transactional data) in digitally signed blocks that are decentralized and broadcast across multiple nodes in a network. In various embodiments, one or more portions of data related to a user purchase history associated with a particular user profile can be stored in a blockchain-enabled database associated with the SVF platform. As such, the user purchase history stored on the blockchain-enabled database can be used by the SVF optimization model in order to determine how many carbon credits and/or carbon offsets have been earned by the user profile for using SVF in one or more vehicles associated with the user profile.

"Data attribute" refers to electronically managed data representing a variable or particular criteria or property having a particular value or status. In some contexts the value is statically fixed or dynamically assigned. In some embodiments, a data attribute embodies a particular property of a data object.

"Data value" refers to electronically managed data representing a particular value for a particular data attribute, operational parameter, sensor device, and/or the like.

The phrases "in an embodiment," "in one embodiment," "according to one embodiment," and the like generally mean that the particular feature, structure, or characteristic following the phrase in some contexts is included in at least one embodiment of the present disclosure, and in some contexts is included in more than one embodiment of the present disclosure (importantly, such phrases do not necessarily refer to the same embodiment). The word "exemplary" is used herein to mean "serving as an example, instance, or illustration." Any implementation described herein as "exemplary" is not necessarily to be construed as preferred or advantageous over other implementations. If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature in some contexts is optionally included in some embodiments, or it in some contexts is excluded.

As used herein, the terms "data," "content," "digital content," "data object," "information," and similar terms may be used interchangeably to refer to data capable of being transmitted, received, and/or stored in accordance with embodiments of the present invention. Further, where a computing device is described herein to receive data from another computing device, it will be appreciated that the data may be received directly from another computing device or may be received indirectly via one or more intermediary computing devices, such as, for example, one or more servers, relays, routers, network access points, base stations, hosts, and/or the like, sometimes referred to herein as a "network." Similarly, where a computing device is described herein to send data to another computing device, it will be appreciated that the data may be sent directly to another computing device or may be sent indirectly via one or more intermediary computing devices, such as, for example, one or more servers, relays, routers, network access points, base stations, hosts, and/or the like.

### EXAMPLE SYSTEMS, APPARATUSES, AND DATAFLOWS OF THE DISCLOSURE

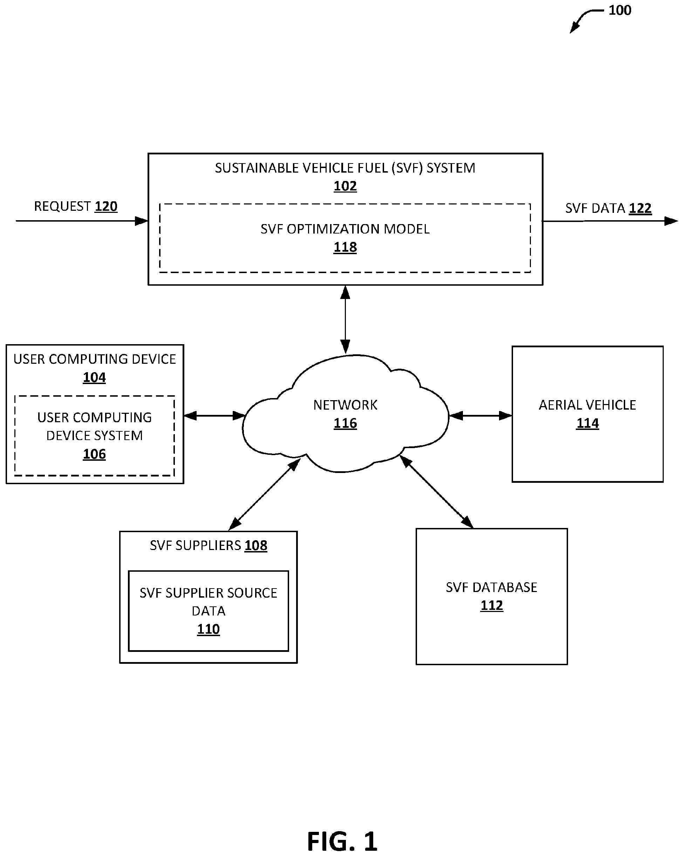

FIG. 1 illustrates a sustainable vehicle fuel (SVF) platform 100 according to one or more described features of one or more embodiments of the disclosure. According to an embodiment, the SVF platform 100 includes an SVF system 102. In one or more embodiments, the SVF system 102 receives the request 120 from the user computing device system 106. In certain embodiments, the SVF system 102 receives the request 120 via the network 116. Additionally, in one or more embodiments, the SVF system 102 transmits the SVF data 122 to the user computing device system 106. In certain embodiments, the SVF system 102 transmits the SVF data 122 via the network 116. In one or more embodiments, the user computing device 104 includes the user computing device system 106.

In various embodiments, the SVF system 102 receives data from multiple sources including, but not limited to, SVF suppliers 108, an SVF database 112, a user computing device 104, and/or a vehicle (e.g., an aerial vehicle 114). In one or more embodiments, at least a portion of the data from the SVF suppliers 108, the SVF database 112, the user computing device 104, and/or the vehicle (e.g., an aerial vehicle 114) is included in the SVF data 122. In one or more embodiments, the SVF suppliers 108, the SVF database 112, the user computing device 104, and/or the vehicle (e.g., an aerial vehicle 114) are associated with a fleet of vehicles owned and operated by a particular enterprise. For example, a fleet of aerial vehicles 114 can be associated with an enterprise including, but not limited to, a commercial airline, a transportation enterprise, a logistics enterprise, a freight delivery enterprise, a retail enterprise, a manufacturing enterprise, an agricultural enterprise, an energy production enterprise, a travel enterprise, and/or any other type of relevant enterprise.

In one or more embodiments, the SVF system 102 is in communication with a vehicle (e.g., an aerial vehicle 114) for selectively sending/receiving data (e.g., SVF mixing ratio data) between the vehicle and the SVF system 102 via the network 116. The data associated with the vehicles includes, for example, vehicle capability data (e.g., fuel-capacity data, fuel type data), vehicle operation constraints, vehicle health data (e.g., operational status of one or more vehicle subsystems), trip plan data, sensor data, real-time travel data, event data, process data, operational data, location data, and/or other data associated with the vehicle (e.g., the aerial vehicle 114). In various other embodiments, the SVF system 102 receives the data associated with the vehicle (e.g., the aerial vehicle 114) from the user computing device 104.

In various embodiments, one or more portions of said data associated with the vehicle (e.g., the aerial vehicle 114) can be comprised in the SVF data 122. Additionally or alternatively, the data associated with the vehicle (e.g., the aerial vehicle 114) includes historical vehicle capability data, historical vehicle operation constraints, historical vehicle health data, historical sensor data, historical trip plan data, historical travel data, historical event data, historical process data, historical operational data, historical fault data, historical mission data, historical location data, and/or other historical data associated with the vehicle (e.g., the aerial vehicle 114). In various embodiments, one or more portions of said historical data associated the vehicle (e.g., the aerial vehicle 114) can be comprised in the SVF data 122. Furthermore, in various embodiments, the vehicle (e.g., the aerial vehicle 114) can be associated with a particular user profile related to the SVF platform 100.

In one or more embodiments, the SVF system 102 receives the data associated with the vehicle (e.g., the aerial vehicle 114), the SVF suppliers 108 (e.g., SVF supplier source data 110), and/or one or more user profiles via the network 116. In one or more embodiments, the network 116 is a Wi-Fi network, a near field communication (NFC) network, a WiMAX network, a personal area network (PAN), a short-range wireless network (e.g., a Bluetooth^{®} network), an infrared wireless (e.g., IrDA) network, an ultra-wideband (UWB) network, an induction wireless transmission network, and/or another type of network.

In one or more embodiments, the SVF system 102 is configured to receive and/or aggregate one or more portions of SVF supplier source data 110 associated with one or more SVF suppliers 108, vehicle data associated with one or more vehicles (e.g., one or more aerial vehicles 114), and/or user profile data associated with one or more user profiles. For instance, in one or more embodiments, the SVF system 102 aggregates the data associated with the vehicles (e.g., the one or more aerial vehicles 114), the SVF suppliers 108 (e.g., SVF supplier source data 110), and/or the one or more user profiles into an SVF database 112. The SVF database 112 is a cache memory (e.g., a database structure) that dynamically stores the data associated with the vehicles and/or the SVF suppliers 108. In one or more embodiments, the SVF system 102 formats one or more portions of the data associated with the vehicles (e.g., the one or more aerial vehicles 114) and/or the SVF suppliers 108. For instance, in one or more embodiments, the SVF system 102 provides a formatted version of the data associated with the vehicles (e.g., the one or more aerial vehicles 114) and/or the SVF suppliers 108 to the SVF database 112. In one or more embodiments, the SVF database 112 is a blockchain-enabled database.

As described herein, the SVF system 102 associated with the SVF platform is configured to receive and/or aggregate one or more portions of SVF supplier source data 110 associated with one or more SVF suppliers 108. As there is no centralized organization dedicated to standardizing SVF suppliers 108 and/or the source data related to the SVF suppliers 108, the SVF may receive SVF supplier source data 110 configured in one or more data formats. As such, the SVF system 102 is configured to parse, collate, organize, aggregate, format, and/or otherwise manage SVF supplier source data 110 that is configured in one or more data formats including, but not limited to, one or more Extensible Markup Language (XML) documents, one or more application programming interface (API) data query results, one or more data objects (e.g., one or more data objects configured in a JavaScript Object Notation (JSON) format), one or more spreadsheets, and/or one or more emails associated with the one or more SVF suppliers 108.

The SVF system 102 comprises, among other components, an SVF optimization model 118. The SVF optimization model 118 is a machine learning (ML) model that is configured to determine at least one of one or more suggested SVF mixing ratios for a vehicle related to a particular user profile, one or more suggested travel hubs for the vehicle related to the particular user profile, and/or one or more of a carbon credit and/or carbon offset associated with the particular user profile. The SVF optimization model 118 can take as input at least one of one or more portions of data related to the particular user profile (e.g., a user purchase history), one or more trip plans associated with the particular user profile, one or more vehicle operation constraints associated with the vehicle related to the particular user profile, one or more SVF suppliers 108, one or more portions of SVF supplier source data 110, one or more travel hubs, and/or the like. In various embodiments, the SVF optimization model 118 can determine the one or more carbon credits and/or carbon offsets associated with the particular user profile based on user purchase history stored in a blockchain-enabled database (e.g., the SVF database 112).

The SVF system 102, in some contexts, receives one or more requests 120 via a communications network 116. The one or more request 120s may include, but are not limited to, a request 120 to aggregate SVF supplier source data 110 from one or more respective SVF suppliers 108, a request 120 to generate and/or render a current SVF availability associated with one or more SVF suppliers 108, a request 120 to suggest an SVF mixing ratio for a particular vehicle related to a user profile, a request 120 to schedule an SVF fueling reservation for the particular vehicle related to the user profile, a request 120 to generate user profile data for the user profile, a request 120 to suggest one or more travel hubs offering SVF based on a relative cost of the SVF and/or the location of the travel hub, and/or a request 120 to generate and/or cause rendering of an interactive SVF dashboard on one or more user computing devices 104.

Additionally, the SVF system 102 is configured to log, store, transmit, and/or otherwise manage one or more portions of data related to one or more vehicles (e.g., one or more aerial vehicles 114), one or more user profiles, one or more travel hubs, and/or one or more SVF suppliers 108 associated with the SVF platform. For example, the SVF system 102 is configured to cause storage of one or more portions of SVF data 122, SVF supplier source data 110, user profile data, vehicle data, travel hub data, SVF fueling reservation data, and/or the like in an SVF database 112 associated with the SVF platform. Furthermore, the SVF system 102 is configured to generate and/or cause the rendering of an interactive SVF dashboard on one or more computing devices, where the interactive SVF dashboard is generated based at least in part on the one or more portions of the SVF data 122, the SVF supplier source data 110, the user profile data, the vehicle data, the travel hub data, the SVF fueling reservation data, and/or the like.

In various contexts, the interactive SVF dashboard can be used to facilitate and/or cause initiation of one or more SVF operations related to the SVF platform. As a non-limiting example, an interactive SVF dashboard rendered on a user computing device 104 associated with a particular user profile can be used to make an SVF fueling reservation with a particular SVF supplier located at a respective travel hub based in part on a trip plan associated with a vehicle (e.g., an aerial vehicle 114) related to the particular user profile. Other non-limiting examples of the various SVF operations the interactive SVF dashboard can facilitate include, but are not limited by, executing one or more SVF searches, executing one or more SVF purchases, generating an interactive map based on SVF supplier source data 110, and/or rendering one or more portions of user profile data.

In one or more embodiments, the user profile data associated with a particular user profile can comprise, but is not limited to, data related to at least one of a user search history related to one or more searches executed via the interactive SVF dashboard associated with the SVF system 102, a user purchase history associated with one or more purchases of SVF made by the user profile, and/or a user trip history associated with one or more prior trip plans executed by a vehicle associated with the user profile.

The user search history comprises data related to one or more searches executed via an interactive SVF dashboard associated with the SVF system 102, where the one or more searches executed via the interactive SVF dashboard are related to SVF. The user purchase history comprises data related to at least one of one or more purchased SVF quantities, one or more purchased SVF types, one or more purchased SVF mixing ratios, one or more previously patronized SVF suppliers 108, and/or one or more previously visited travel hubs associated with the one or more previously patronized SVF suppliers 108. The user trip history comprises data related to at least one of one or more trip routes taken during execution of the one or more prior trip plans, one or more SVP types used during the execution of the one or more prior trip plans, and/or one or more SVF mixing ratios used during the execution of the one or more prior trip plans.

In one or more embodiments, the SVF system 102 can cause storage of one or more portions of user profile data related to the one or more user profiles associated with the SVF platform in a blockchain-enabled database (e.g., the SVF database 112). The SVF system 102 can verify (e.g., by way of the SVF optimization model 118) one or more SVF purchases related to a particular user profile that have been stored in the blockchain-enabled database in order to determine the one or more carbon offsets and/or carbon credits generated by the user profile for using SVF one or more vehicles associated with the user profile.

In one or more embodiments, the user computing device 104 is in communication with the SVF system 102 via the network 116. In one or more embodiments, the user computing device 104 is a mobile computing device, a smartphone, a tablet computer, a mobile computer, a desktop computer, a laptop computer, a workstation computer, a wearable device, a virtual reality device, an augmented reality device, or another type of computing device located remote from the SVF system 102. In an embodiment, the user computing device 104 transmits the request 120 to the SVF system 102 via the network 116. For instance, in one or more embodiments, the user computing device 104 of the user computing device 104 transmits the request 120 to the SVF system 102 via the network 116. In another embodiment, the SVF system 102 transmits the SVF data 122 to the user computing device 104 via the network 116. For instance, in one or more embodiments, the SVF system 102 communicates the SVF data 122 to the user computing device system 106 of the user computing device 104 via the network 116.

In one or more embodiments, the SVF data 122 includes one or more visual elements for the visual display of the user computing device 104 that renders the interactive SVF dashboard based on a respective SVF dashboard configuration. In certain embodiments, the visual display of the user computing device 104 displays one or more graphical elements associated with the SVF data 122. In certain embodiments, the visual display of the user computing device 104 presents one or more interactive display elements associated with the SVF data 122. In another example, in one or more embodiments, the SVF data 122 includes one or notifications associated with the SVF data 122. In one or more embodiments, the SVF data 122 allows a user profile associated with the user computing device 104 to make decisions and/or perform one or more actions with respect to an aerial vehicle 114.

In various embodiments, the interactive SVF dashboard rendered via the visual display of the user computing device 104 allows filtering of the SVF data 122 and/or related interactive display elements. Additionally, one or more actions performed with respect to interactive display elements of the interactive SVF dashboard of the user computing device 104 can initiate one or more actions with respect to the SVF system 102. For example, one or more actions performed with respect to interactive display elements of the interactive SVF dashboard of the user computing device 104 can initiate an update to data stored in the SVF database 112 and/or an SVF reservation management portion of the SVF system 102.

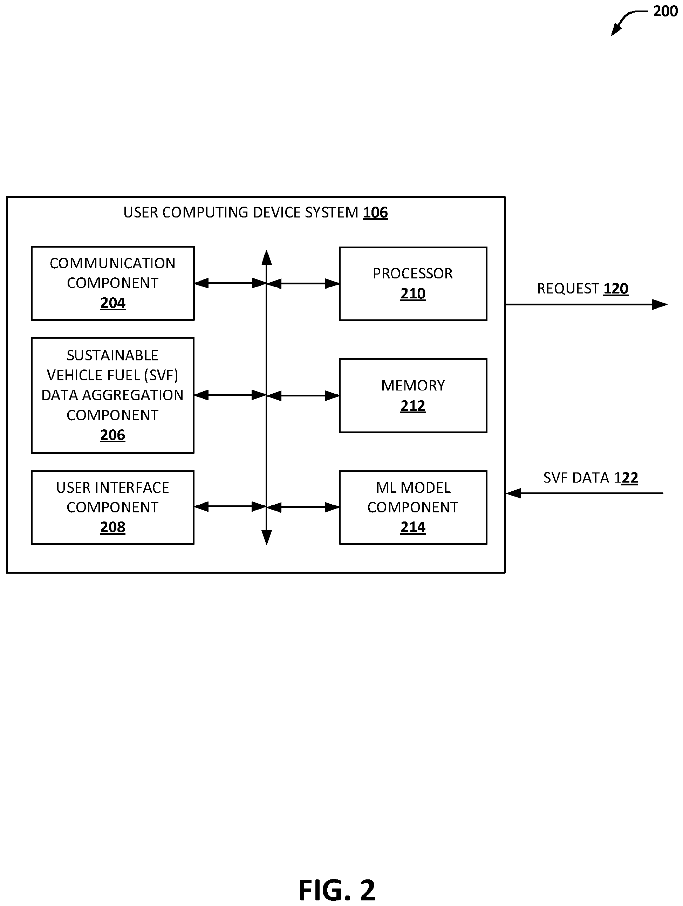

FIG. 2 illustrates a system 200 that provides an exemplary environment according to one or more described features of one or more embodiments of the disclosure. According to an embodiment, the system 200 includes a user computing device system 106 to provide a practical application of parsing, collating, organizing, aggregating, formatting, and/or otherwise managing SVF supplier source data 110 that is configured in one or more data formats. In one or more embodiments, the user computing device system 106 employs the SVF data 122 associated with an SVF platform 100 to provide real-time SVF availability. In various embodiments, the real-time SVF availability is generated based in part on a trip plan associated with a user profile associated with an aerial vehicle 114. In one or more embodiments, the user computing device system 106 provides a practical application of rendering SVF data 122 associated with a user profile related to the aerial vehicle 114.

In an embodiment, the user computing device system 106 facilitates interaction with one or more components of the SVF platform 100 such as, for example, one or more data sources (e.g., the SVF database 112), the SVF system 102, and/or one or more aerial vehicles 114. In one or more embodiments, the user computing device system 106 is a device with one or more processors and a memory. In one or more embodiments, the user computing device system 106 interacts with the one or more data sources to facilitate providing an interactive SVF dashboard associated with the SVF platform 100 for one or more user profiles associated with one or more respective vehicles (e.g., one or more respective aerial vehicles 114).

In various embodiments, the interactive SVF dashboard is configured as a dashboard visualization, where the visualization data comprises one or more pieces of data related to, but not limited by, one or more portions of data related to the particular user profile (e.g., a user purchase history, a user search history, and/or a user trip history), one or more trip plans associated with the particular user profile, one or more vehicle operation constraints associated with a vehicle related to the particular user profile, one or more SVF mixing ratios for the vehicle related to a particular user profile, one or more travel hubs, one or more of a carbon credit and/or carbon offset associated with the particular user profile, one or more SVF suppliers, one or more portions of SVF supplier source data, one or more travel hubs, a real-time SVF availability and/or the like.

The user computing device system 106 includes a communication component 204, an SVF data aggregation component 206 and/or a user interface component 208. Additionally, in one or more embodiments, the user computing device system 106 includes a processor 210, a memory 212, and/or a machine learning (ML) model component 214. In certain embodiments, one or more aspects of the user computing device system 106 (and/or other systems, apparatuses and/or processes disclosed herein) constitute executable instructions embodied within a computer-readable storage medium (e.g., the memory 212). For instance, in an embodiment, the memory 212 stores computer executable components and/or executable instructions (e.g., program instructions). Furthermore, the processor 210 facilitates execution of the computer executable components and/or the executable instructions (e.g., the program instructions). In an example embodiment, the processor 210 is configured to execute instructions stored in the memory 212 or otherwise accessible to the processor 210.

The processor 210 is a hardware entity (e.g., physically embodied in circuitry) capable of performing operations according to one or more embodiments of the disclosure. Alternatively, in an embodiment where the processor 210 is embodied as an executor of software instructions, the software instructions configure the processor 210 to perform one or more algorithms and/or operations described herein in response to the software instructions being executed. In an embodiment, the processor 210 is a single core processor, a multi-core processor, multiple processors internal to the user computing device system 106, a remote processor (e.g., a processor implemented on a server), and/or a virtual machine. In certain embodiments, the processor 210 is in communication with the memory 212, the communication component 204, the SVF data aggregation component 206 and/or the user interface component 208 via a bus to, for example, facilitate transmission of data among the processor 210, the memory 212, the communication component 204, the SVF data aggregation component 206, the user interface component 208, and/or the ML model component 214. The processor 210 may be embodied in a number of different ways and, in certain embodiments, includes one or more processing devices configured to perform independently. Additionally or alternatively, in one or more embodiments, the processor 210 includes one or more processors configured in tandem via a bus to enable independent execution of instructions, pipelining of data, and/or multi-thread execution of instructions.

The memory 212 is non-transitory and includes, for example, one or more volatile memories and/or one or more non-volatile memories. In other words, in one or more embodiments, the memory 212 is an electronic storage device (e.g., a computer-readable storage medium). The memory 212 is configured to store information, data, content, one or more applications, one or more instructions, or the like, to enable the user computing device system 106 to carry out various functions in accordance with one or more embodiments disclosed herein. As used herein in this disclosure, the term "component," "system," and the like, is a computer-related entity. For instance, "a component," "a system," and the like disclosed herein is either hardware, software, or a combination of hardware and software. As an example, a component is, but is not limited to, a process executed on a processor, a processor, circuitry, an executable component, a thread of instructions, a program, and/or a computer entity.

The ML model component 214 includes hardware, software, firmware, and/or a combination thereof, that supports functionality associated with the SVF optimization model 118 associated with the SVF system 102. For example, the ML model component 214 executes, at least in part, one or more portions of program code associated with the methods and operations of the SVF optimization model 118. For example, the ML model component 214 includes hardware, software, firmware, and/or a combination thereof, that receives and/or analyzes one or more portions of model input comprising at least one of one or more portions of user profile data related to the particular user profile (e.g., a user purchase history), one or more trip plans associated with the particular user profile, one or more vehicle operation constraints associated with the vehicle related to the particular user profile, one or more SVF suppliers, one or more portions of SVF supplier source data, one or more travel hubs, and/or the like. Additionally, the ML model component 214 in some contexts is configured to receive one or more portions of data related to a request (e.g., a request 120 to determine one or more carbon offsets associated with a particular user profile).

Additionally, in various embodiments, the ML model component 214 includes hardware, software, firmware, and/or a combination thereof, that in some contexts is employed to train and/or retrain the SVF optimization model 118 based at least in part on one or more portions of SVF data 122 and/or prior model input comprising one or more portions of prior user profile data related to the particular user profile (e.g., a user purchase history), one or more prior trip plans associated with the particular user profile, one or more prior vehicle operation constraints associated with the vehicle related to the particular user profile, one or more prior SVF suppliers, one or more portions of prior SVF supplier source data, one or more prior travel hubs, and/or the like. In various embodiments, the ML model component 214 is configured to facilitate the training and/or retraining of the SVF optimization model 118 based in part on a predefined schedule such as, for example, daily, weekly, bi-weekly, monthly, and/or the like. In this regard, the ML model component 214 includes hardware, software, firmware, and/or a combination thereof, that causes the storage, updating, retrieval, and/or the deletion of one or more portions of data associated with the SVF optimization model 118.

In one or more embodiments, the communication component 204 is configured to generate a request. In various contexts, the request may be a request 120 to aggregate SVF supplier source data 110 from one or more respective SVF suppliers 108, a request 120 to generate and/or render a current SVF availability associated with one or more SVF suppliers 108, a request 120 to suggest an SVF mixing ratio for a particular vehicle related to a user profile, a request 120 to schedule an SVF fueling reservation for the particular vehicle related to the user profile, a request 120 to generate user profile data for the user profile, a request 120 to suggest one or more travel hubs offering SVF based on a relative cost of the SVF and/or the location of the travel hub, and/or a request 120 to generate and/or cause rendering of an interactive SVF dashboard on one or more user computing devices 104.

In various embodiments, the communication component 204 generates the request 120 in response to an action performed with respect to a first user interface configuration for an interactive SVF dashboard. The action can be, for example, initiating execution of an application (e.g., a mobile application) via a user computing device that presents the interactive SVF dashboard, altering an interactive graphical element via the interactive SVF dashboard, or another type of action with respect to the interactive SVF dashboard. Additionally or alternatively, in one or more embodiments, the communication component 204 generates the request 120 in response to execution of a user authentication process via a user computing device 104. For example, in an embodiment, the user authentication process is associated with password entry, facial recognition, biometric recognition, security key exchange, and/or another security technique associated with a user computing device.

Additionally or alternatively, in one or more embodiments, the request 120 includes one or more user identifiers describing a user role for a user profile associated with a user computing device 104 accessing the SVF system 102. A user identifier includes, for example, an identifier for a user profile, where the user profile can be associated with a particular user role. Various user roles can include, but are not limited to, a pilot, a driver, a vehicle crew member, a ground crew member, an administrator, a remote operator, and/or a third party that might have a reason to interact with an aerial vehicle 114 and/or the SVF system 102.

In an embodiment, the communication component 204 is configured to transmit the request 120. In one or more embodiments, the communication component 204 transmits the request 120 to a server system. For example, in one or more embodiments, the communication component 204 transmits the request 120 to an SVF system 102. In one or more embodiments, the communication component 204 transmits the request 120 via the network 116. In response to the request 120, the communication component 204 and/or the SVF data aggregation component 206 is configured to receive SVF data 122. In one or more embodiments, the SVF data aggregation component 206 receives the SVF data 122 from the server system. For example, in one or more embodiments, the SVF data aggregation component 206 receives the SVF data 122 from an SVF system (e.g., SVF system 102).

In one or more embodiments, the SVF data aggregation component 206 receives the SVF data 122 to facilitate altering configuration of the interactive SVF dashboard based on the SVF data 122. In one or more embodiments, the communication component 204 and/or the SVF data aggregation component 206 receives the SVF data 122 via the network 116. In certain embodiments, the communication component 204 and/or the SVF data aggregation component 206 incorporates encryption capabilities to facilitate encryption and/or decryption of one or more portions of the SVF data 122. In one or more embodiments, the network 116 is a Wi-Fi network, a Near Field Communications (NFC) network, a Worldwide Interoperability for Microwave Access (WiMAX) network, a personal area network (PAN), a short-range wireless network (e.g., a Bluetooth^{®} network), an infrared wireless (e.g., IrDA) network, an ultra-wideband (UWB) network, an induction wireless transmission network, and/or another type of network.

In one or more embodiments, the SVF data 122 is configured based on one or more user profile identifiers and/or one or more vehicle identifiers. Additionally and/or alternatively, the SVF data 122 can be configured based on one or more user searches (e.g., one or more user searches conducted via the interactive SVF dashboard associated with a user computing device 104). For example, the SVF data 122 may comprise data related to, but not limited by, SVF supplier source data 110 (e.g., SVF availability data, available SVF type data, available SVF mixing ratio data, SVF supplier location data, SVF fueling reservation data, SVF cost data, SVF offers and/or discount data, travel hub affiliation data, and/or any data related to one or more SVF suppliers), user profile data (e.g., user purchase history data, user search history data, user trip history data, trip plan data, carbon offset and/or carbon credit data, and/or any data related to one or more user profiles associated with SVF platform), and/or vehicle data (e.g., vehicle identification data, vehicle capability data, vehicle operation constraint data, and/or any data related to a particular vehicle (e.g., aerial vehicle 114)).

The user interface component 208 is configured to render an interactive SVF dashboard via a display of a user computing device 104. In one or more embodiments, the interactive SVF dashboard is configured as a dashboard visualization rendered via a display of a user computing device. In one or more embodiments, the interactive SVF dashboard is configured to provide dynamic interaction with one or more respective interactive display elements rendered via the interactive SVF dashboard. An interactive display element is a portion of the interactive SVF dashboard (e.g., a user-interactive electronic interface portion) that provides interaction with respect to an end user of the user computing device 104. For example, in one or more embodiments, an interactive display element is an interactive display element associated with a set of pixels that allows a user to provide feedback and/or to perform one or more actions with respect to the interactive SVF dashboard. Non-limiting examples of interactive display elements can include interactive buttons, sliders, hyperlinks, text input fields, graphs, charts, and/or tables.

In an embodiment, in response to interaction with an interactive display element, the interactive SVF dashboard is dynamically altered to display one or more altered portions of the interactive SVF dashboard associated with different visual data and/or different interactive display elements. Additionally, in one or more embodiments, the interactive SVF dashboard is configured to facilitate execution and/or initiation of one or more actions via the dashboard visualization based on the SVF data 122 (e.g., facilitation of an SVF fueling reservation with a particular SVF supplier 108 at a respective travel hub). In an embodiment, an action is executed and/or initiated via an interactive display element of the dashboard visualization. In certain embodiments, the interactive SVF dashboard presents one or more notifications associated with the prioritized actions related to the SVF data 122.

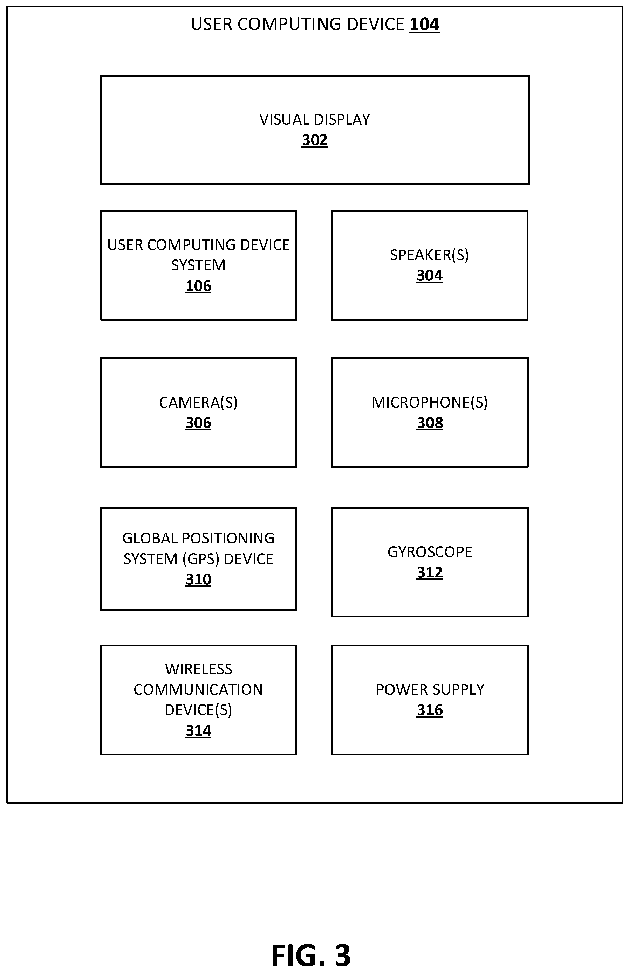

FIG. 3 illustrates an exemplary user computing device in accordance with some embodiments discussed herein. The user computing device 104 can be a mobile computing device, a smartphone, a tablet computer, a mobile computer, a desktop computer, a laptop computer, a workstation computer, a wearable device, a virtual reality device, an augmented reality device, or another type of computing device. In one or more embodiments, the user computing device 104 employs mobile computing, augmented reality, cloud-based computing, IoT technology and/or one or more other technologies to provide performance data, video, audio, text, graphs, charts, real-time data, graphical data, one or more communications, one or more messages, one or more notifications, and/or other media data associated with the dashboard visualization. The user computing device 104 includes mechanical components, electrical components, hardware components and/or software components to facilitate rendering of the dashboard visualization. The user computing device 104 includes the user computing device system 106. In the embodiment shown in FIG. 3, the user computing device 104 also includes a visual display 302, one or more speakers 304, one or more cameras 306, one or more microphones 308, a global positioning system (GPS) device 310, a gyroscope 312, one or more wireless communication devices 314, and/or a power supply 316.

In an embodiment, the visual display 302 is a display that facilitates presentation of and/or interaction with the dashboard visualization associated with the SVF data 122. In one or more embodiments, the user computing device 104 displays the interactive SVF dashboard. In one or more embodiments, the visual display 302 is a visual display that renders data associated with the interactive SVF dashboard. In one or more embodiments, the visual display 302 displays respective interactive display elements associated with the SVF data 122. In one or more embodiments, the visual display 302 provides the interactive SVF dashboard that is configured to allow a user associated with the user computing device 104 to interact with respective user interface configurations of the interactive SVF dashboard. Additionally, in one or more embodiments, the visual display 302 provides the interactive SVF dashboard that is configured to allow a user associated with the user computing device 104 to control the one or more interactive display elements associated with one or more vehicle operation faults and/or one or more compound vehicle operation faults. In one or more embodiments, the interactive SVF dashboard is configured based on user profile data and/or user privileges. In certain embodiments, user specific requirements associated with the interactive SVF dashboard is configured via a backend system (e.g., an SVF system 102). In one or more embodiments, the interactive SVF dashboard is configured based on hardware and/or software specifications of the user computing device 104.

The one or more speakers 304 include one or more integrated speakers that project audio. The one or more cameras 306 include one or more cameras that employ autofocus and/or image stabilization for photo capture and/or real-time video. The one or more microphones 308 include one or more digital microphones that employ active noise cancellation to capture audio data. The GPS device 310 provides a geographic location for the user computing device 104. The gyroscope 312 provides an orientation for the user computing device 104. The one or more wireless communication devices 314 includes one or more hardware components to provide wireless communication via one or more wireless networking technologies and/or one or more short-wavelength wireless technologies. The power supply 316 is, for example, a power supply and/or a rechargeable battery that provides power to the visual display 302, the one or more speakers 304, the one or more cameras 306, the one or more microphones 308, the GPS device 310, the gyroscope 312, and/or the one or more wireless communication devices 314. In certain embodiments, the SVF data 122 is presented via the visual display 302 and/or the one or more speakers 304. In certain embodiments, the visual display 302, the one or more cameras 306, the one or more microphones 308, and/or the GPS device 310 facilitate the user authentication process. In certain embodiments, one or more portions of the one or more wireless communication devices 314 are configured via the communication component 204 to facilitate transmission of the request 120.

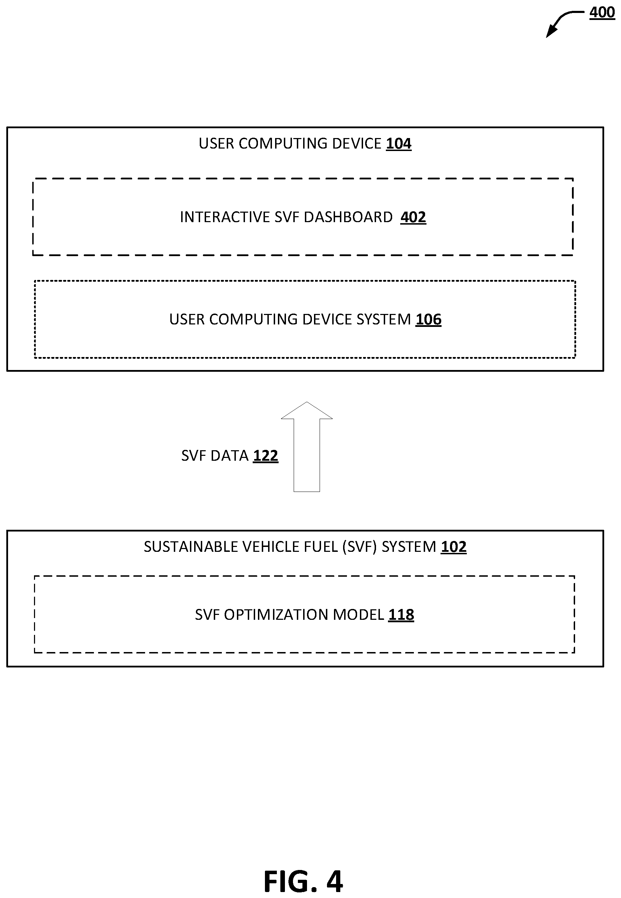

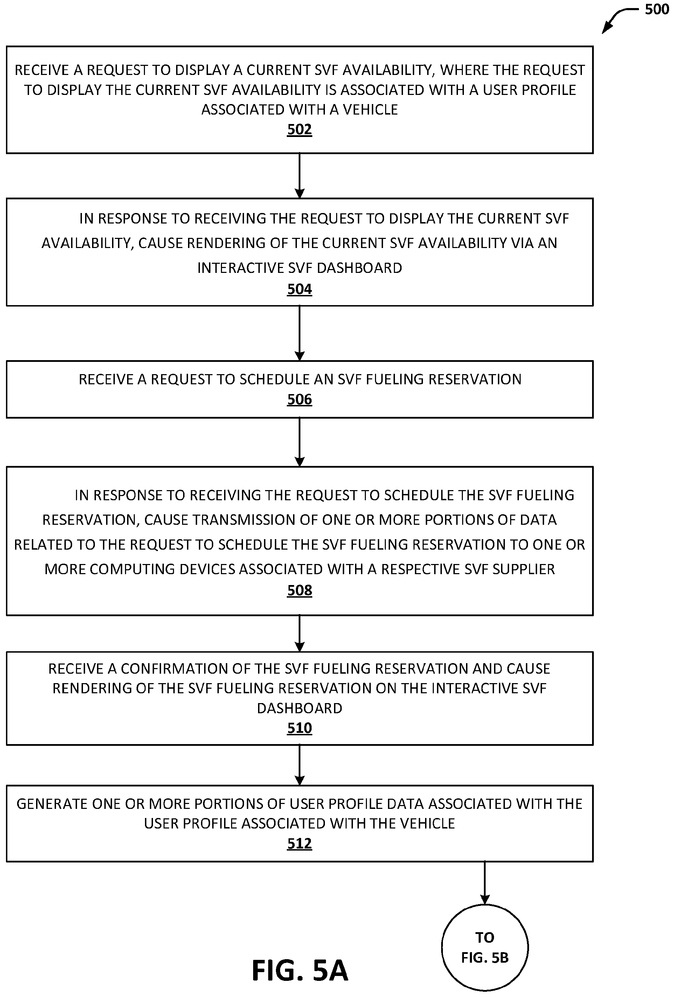

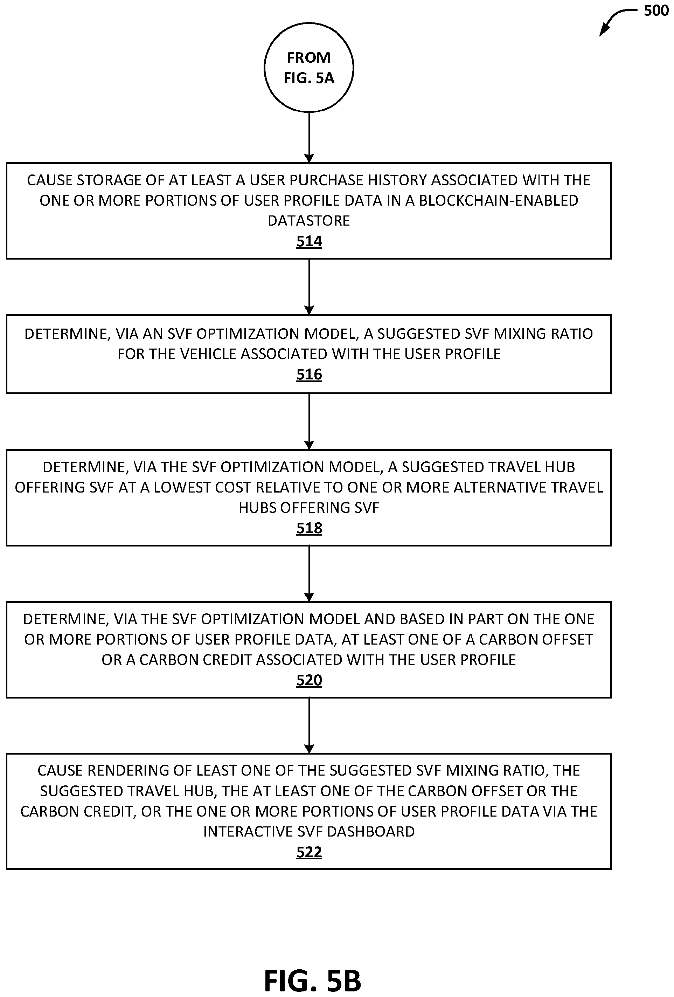

FIG. 4 illustrates an exemplary system 400 associated with an interactive SVF dashboard 402, in accordance with some embodiments discussed in the present disclosure. In an embodiment, the system 400 includes the user computing device 104 and the SVF system 102. In one or more embodiments, the user computing device 104 includes the user computing device system 106 to facilitate generation of an interactive SVF dashboard 402. In one or more embodiments, the interactive SVF dashboard 402 is rendered via the visual display 302 of the user computing device system 106. Furthermore, in certain embodiments, the SVF system 102 is communicatively coupled to the user computing device 104 associated with a particular user profile.

In one or more embodiments, the interactive SVF dashboard 402 is accessible and/or implemented via the user computing device 104. In one or more embodiments, the interactive SVF dashboard 402 is configured to provide one or more SVF operations associated with the SVF data 122. In one or more embodiments, the SVF system 102 is configured to provide the SVF data 122 to the user computing device 104 to facilitate rendering of the interactive SVF dashboard 402 related to a user profile associated with the aerial vehicle 114.

The user interface component 208 is configured to render an interactive SVF dashboard 402 via a display of a user computing device 104. In one or more embodiments, the interactive SVF dashboard 402 is configured as a dashboard visualization rendered via a display of a user computing device 104. In one or more embodiments, the interactive SVF dashboard 402 is configured to provide dynamic interaction with one or more respective interactive display elements via the interactive SVF dashboard 402. An interactive display element is a portion of the interactive SVF dashboard 402 (e.g., a user-interactive electronic interface portion) that provides interaction with respect to an end user of the user computing device 104. For example, in one or more embodiments, an interactive display element is an interactive display element associated with a set of pixels that allows a user to provide feedback and/or to perform one or more actions with respect to the interactive SVF dashboard 402. Non-limiting examples of interactive display elements can include interactive buttons, sliders, hyperlinks, text input fields, graphs, charts, tables, and/or the like.

In an embodiment, in response to interaction with an interactive display element, the interactive SVF dashboard 402 is dynamically altered to display one or more altered portions of the interactive SVF dashboard 402 associated with different visual data and/or different interactive display elements. Additionally, in one or more embodiments, the interactive SVF dashboard 402 is configured to facilitate execution and/or initiation of one or more actions via the dashboard visualization based on the SVF data 122. In an embodiment, an action is executed and/or initiated via an interactive display element of the dashboard visualization. For example, one or more of the methods described herein can be executed and/or initiated via the interactive SVF dashboard 402 in response to one or more respective interactions with one or more interactive display elements associated with the interactive SVF dashboard 402. In certain embodiments, the interactive SVF dashboard 402 presents one or more notifications associated with the prioritized actions related to the SVF data 122.

In one or more embodiments, the visual display 302 provides the interactive SVF dashboard 402 that is configured to allow a user associated with the user computing device 104 to interact with respective user interface configurations of the interactive SVF dashboard. Additionally, in one or more embodiments, the visual display 302 provides the interactive SVF dashboard 402 that is configured to allow a user associated with the user computing device 104 to control the one or more interactive display elements associated with SVF data 122. In one or more embodiments, the interactive SVF dashboard is configured based on user profile data and/or user privileges. In certain embodiments, user specific requirements associated with the interactive SVF dashboard is configured via a backend system (e.g., the SVF system 102). In one or more embodiments, the interactive SVF dashboard 402 is configured based on hardware and/or software specifications of the user computing device 104.

An end user associated with a respective user profile can engage the interactive SVF dashboard 402 to cause execution and/or initiation one or more SVF operations associated with the user profile including, but not limited to, performing one or more searches related to SVF, (e.g., SVF availability based on a trip plan associated with the user profile), filtering one or more portions of SVF data 122 rendered via the interactive SVF dashboard 402, facilitating one or more SVF fueling reservations with an SVF supplier located at a particular travel hub, displaying one or more suggested travel hubs, where the suggested travel hub may offer a maximum cost savings for SVF relative to one or more other travel hubs, and/or receiving one or more notification related to one or more of an SVF availability related to a particular SVF supplier, one or more notifications related to a user purchase history associated with the user profile, one or more SVF offers and/or discounts offered by a particular SVF supplier.

In various embodiments, the SVF system 102 can generate one or more API calls related to the one or more searches related to SVF initiated via one or more interactions with the interactive SVF dashboard 402. As a non-limiting example, the one or more API calls can be configured to query one or more SVF suppliers 108 in order to obtain one or more portions of SVF supplier source data 110. The SVF system 102 can, by way of the interactive SVF dashboard 402, can execute the one of more searches related to SVF based on one or more of a trip plan associated with a user profile, an ICAO airport code, a travel hub identifier, an SVF price range, a minimum distance from a travel route associated with a trip plan, a maximum distance from a travel route associated with a trip plan, one or more portions of vehicle data (e.g., vehicle data related to an aerial vehicle 114), one or more portions of user purchase history data, one or more portions of user search history data, one or more portions of user profile data, and/or the like.

Additionally, the interactive SVF dashboard 402 is configured to display one or more interactive maps associated with a trip plan related to a particular user profile. Furthermore, the SVF system 102 can configured the interactive SVF dashboard 402 to display one or more relevant portions of the SVF data 122 on the one or more interactive maps. For example, the interactive SVF dashboard 402 can be configured to display a real-time SVF availability associated with one or more SVF suppliers 108 based on a trip plan associated with the particular user profile. In various contexts, based on an interaction with the interactive map rendered on the interactive SVF dashboard 402 (e.g., an interaction with an interactive display element associated with a particular SVF supplier 108), one or more actions can be initiated. As a non-limiting example, based on an interaction with the interactive map rendered on the interactive SVF dashboard 402, an SVF fueling reservation can be facilitated with a particular SVF supplier 108 located at a respective travel hub related to the trip plan associated with the user profile.

FIG(s). 5A-B illustrate a process flow diagram related to an example method 500 for executing a plurality of SVF operations related to the SVF platform 100 in accordance with some embodiments discussed herein. In some embodiments, the method 500 is embodied by computer program code stored on a non-transitory computer-readable storage medium of a computer program product configured for execution to perform the method 500 as depicted and described. Additionally or alternatively, in some embodiments, the method 500 is performed by one or more specially configured computing devices, such as the user computing device system 106 alone or in communication with one or more other component(s), device(s) (e.g., user computing device 104), and/or system(s) (e.g., SVF system 102). In this regard, in some such embodiments, the user computing device system 106 is specially configured by computer-coded instructions (e.g., computer program instructions) stored thereon, for example in the memory 212 and/or another component depicted and/or described herein and/or otherwise accessible to the user computing device system 106, for performing the operations as depicted and described.

In some embodiments, the user computing device system 106 is in communication with one or more external apparatus(es), system(s), device(s), and/or the like, to perform one or more of the operations as depicted and described. For example, the user computing device system 106 in some embodiments is in communication with one or more system(s) integrated with, or embodying, an autonomous vehicle network platform (e.g., user computing device system 106 embodied by an autonomous vehicle network platform and integrated with the SVF system 102). For purposes of simplifying the description, the method 500 is described as performed by and from the perspective of the user computing device system 106.

The method 500 begins at operation 502. At operation 502, the user computing device system 106 includes means, such as the communication component 204, the SVF data aggregation component 206, the user interface component 208, the processor 210, the memory 212, and/or the ML model component 214, or any combination thereof, that receives a request to display a current SVF availability, wherein the request to display the current SVF availability is associated with a user profile associated with a vehicle (e.g., an aerial vehicle 114), where the request to display the current SVF availability comprises one or more portions of data related to a trip plan associated with the user profile.

At operation 504, the user computing device system 106 includes means, such as the communication component 204, the SVF data aggregation component 206, the user interface component 208, the processor 210, the memory 212, and/or the ML model component 214, or any combination thereof, that, in response to receiving the request to display the current SVF availability, causes rendering of the current SVF availability via an interactive SVF dashboard 402, wherein the current SVF availability is based at least in part on one or more portions of SVF supplier source data 110 associated with one or more respective SVF suppliers 108.

At operation 506, the user computing device system 106 includes means, such as the communication component 204, the SVF data aggregation component 206, the user interface component 208, the processor 210, the memory 212, and/or the ML model component 214, or any combination thereof, that receives a request to schedule an SVF fueling reservation, wherein the request to schedule the SVF fueling reservation is associated with the user profile associated with the vehicle (e.g., the aerial vehicle 114).

At operation 508, the user computing device system 106 includes means, such as the communication component 204, the SVF data aggregation component 206, the user interface component 208, the processor 210, the memory 212, and/or the ML model component 214, or any combination thereof, that, in response to receiving the request to schedule the SVF fueling reservation, causes transmission of one or more portions of data related to the request to schedule the SVF fueling reservation to one or more computing devices (e.g., user computing device 104) associated with a respective SVF supplier of the one or more SVF suppliers 108.

At operation 510, the user computing device system 106 includes means, such as the communication component 204, the SVF data aggregation component 206, the user interface component 208, the processor 210, the memory 212, and/or the ML model component 214, or any combination thereof, that receives a confirmation of the SVF fueling reservation from the respective SVF supplier of the one or more SVF suppliers 108. Additionally, in various embodiments, the user computing device system 106 can cause rendering of the confirmation of the SVF fueling reservation via the interactive SVF dashboard 402.

At operation 512, the user computing device system 106 includes means, such as the communication component 204, the SVF data aggregation component 206, the user interface component 208, the processor 210, the memory 212, and/or the ML model component 214, or any combination thereof, that generates one or more portions of user profile data associated with the user profile associated with the vehicle, where the one or more portions of user profile data comprise data related to at least one of a user search history related to one or more searches executed via the interactive SVF dashboard 402, a user purchase history associated with one or more purchases of SVF made by the user profile, a user trip history associated with one or more prior trip plans executed by the user profile.

At operation 514, the user computing device system 106 includes means, such as the communication component 204, the SVF data aggregation component 206, the user interface component 208, the processor 210, the memory 212, and/or the ML model component 214, or any combination thereof, that causes storage of at least the user purchase history associated with the one or more portions of user profile data in a blockchain-enabled datastore (e.g., the SVF database 112).

At operation 516, the user computing device system 106 includes means, such as the communication component 204, the SVF data aggregation component 206, the user interface component 208, the processor 210, the memory 212, and/or the ML model component 214, or any combination thereof, that determines, via an SVF optimization model 118, a suggested SVF mixing ratio, wherein the suggested SVF mixing ratio is generated based in part on the trip plan and the one or more portions of user profile data.

At operation 518, the user computing device system 106 includes means, such as the communication component 204, the SVF data aggregation component 206, the user interface component 208, the processor 210, the memory 212, and/or the ML model component 214, or any combination thereof, that determines, via the SVF optimization model 118, a suggested travel hub offering SVF at a lowest cost relative to one or more alternative travel hubs offering SVF, where the suggested travel hub is determined based in part on the trip plan and the one or more portions of user profile data.

At operation 520, the user computing device system 106 includes means, such as the communication component 204, the SVF data aggregation component 206, the user interface component 208, the processor 210, the memory 212, and/or the ML model component 214, or any combination thereof, that determines, via the SVF optimization model 118 and based in part on the one or more portions of user profile data, at least one of a carbon offset or a carbon credit associated with the user profile, wherein determining the at least one of the carbon offset or the carbon credit comprises verifying the user purchase history stored on the blockchain-enabled datastore (e.g., the SVF database 112).

At operation 522, the user computing device system 106 includes means, such as the communication component 204, the SVF data aggregation component 206, the user interface component 208, the processor 210, the memory 212, and/or the ML model component 214, or any combination thereof, that causes rendering of least one of the suggested SVF mixing ratio, the suggested travel hub, the at least one of the carbon offset or the carbon credit, or the one or more portions of user profile data via the interactive SVF dashboard 402.

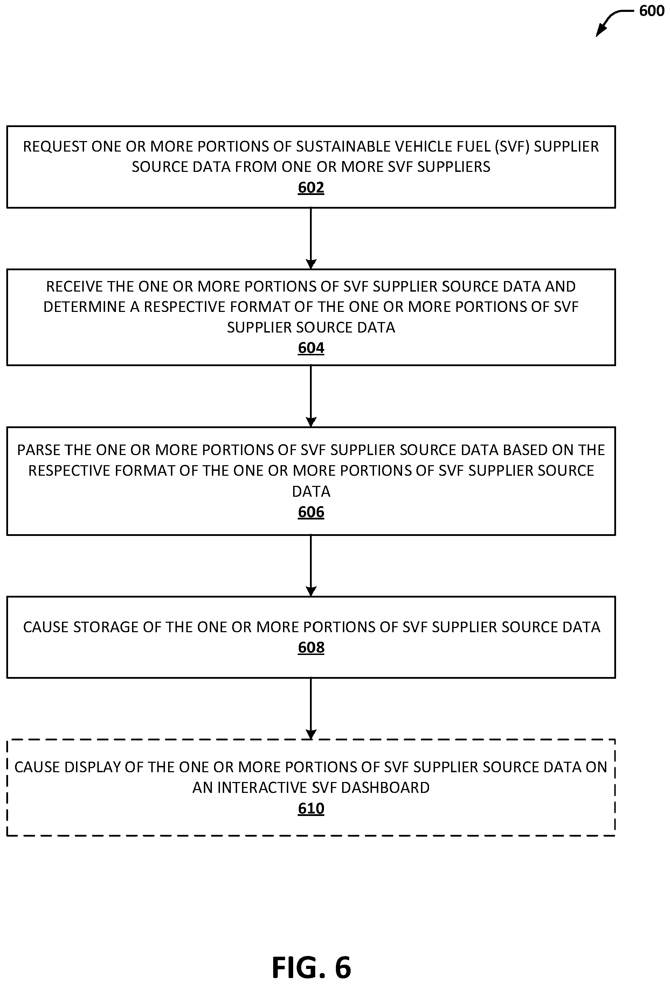

FIG. 6 illustrates a process flow diagram related to an example method for aggregating one or more portions of SVF supplier source data 110 in accordance with some embodiments discussed herein. In some embodiments, the method 600 is embodied by computer program code stored on a non-transitory computer-readable storage medium of a computer program product configured for execution to perform the method 600 as depicted and described. Additionally or alternatively, in some embodiments, the method 600 is performed by one or more specially configured computing devices, such as the user computing device system 106 alone or in communication with one or more other component(s), device(s) (e.g., user computing device 104), and/or system(s) (e.g., SVF system 102). In this regard, in some such embodiments, the user computing device system 106 is specially configured by computer-coded instructions (e.g., computer program instructions) stored thereon, for example in the memory 212 and/or another component depicted and/or described herein and/or otherwise accessible to the user computing device system 106, for performing the operations as depicted and described.

In some embodiments, the user computing device system 106 is in communication with one or more external apparatus(es), system(s), device(s), and/or the like, to perform one or more of the operations as depicted and described. For example, the user computing device system 106 in some embodiments is in communication with one or more system(s) integrated with, or embodying, an autonomous vehicle network platform (e.g., user computing device system 106 embodied by an autonomous vehicle network platform and integrated with the SVF system 102). For purposes of simplifying the description, the method 600 is described as performed by and from the perspective of the user computing device system 106.

The method 600 begins at operation 602. At operation 602, the user computing device system 106 includes means, such as the communication component 204, the SVF data aggregation component 206, the user interface component 208, the processor 210, the memory 212, and/or the ML model component 214, or any combination thereof, that requests one or more portions of SVF supplier source data 110 from one or more SVF suppliers 108.

At operation 604, the user computing device system 106 includes means, such as the communication component 204, the SVF data aggregation component 206, the user interface component 208, the processor 210, the memory 212, and/or the ML model component 214, or any combination thereof, that receives the one or more portions of SVF supplier source data 110 and determine a respective format of the one or more portions of SVF supplier source data 110. For example, SVF supplier source data 110 can be configured in one or more data formats including, but not limited to, one or more Extensible Markup Language (XML) documents, one or more application programming interface (API) data query results, one or more data objects (e.g., one or more data objects configured in a JavaScript Object Notation (JSON) format), one or more spreadsheets, and/or one or more emails associated with the one or more SVF suppliers 108.

At operation 606, the user computing device system 106 includes means, such as the communication component 204, the SVF data aggregation component 206, the user interface component 208, the processor 210, the memory 212, and/or the ML model component 214, or any combination thereof, that parses the one or more portions of SVF supplier source data 110 based on the respective format of the one or more portions of SVF supplier source data 110. In various embodiments, parsing the one or more portions of SVF supplier source data 110 includes formatting, structuring, and/or otherwise organizing the SVF supplier source data 110 for use by the one or more components of the SVF system 102 (e.g., the user computing device 104 and/or the SVF database 112). In various contexts, the SVF system 102 generates one or more portions of SVF data 122 based in part on the one or more portions of SVF supplier source data 110.

At operation 608, the user computing device system 106 includes means, such as the communication component 204, the SVF data aggregation component 206, the user interface component 208, the processor 210, the memory 212, and/or the ML model component 214, or any combination thereof, that causes storage of the one or more portions of SVF supplier source data 110. For example, the one or more portions of SVF supplier source data 110 can be stored in the SVF database 112.

At optional operation 610, the user computing device system 106 includes means, such as the communication component 204, the SVF data aggregation component 206, the user interface component 208, the processor 210, the memory 212, and/or the ML model component 214, or any combination thereof, that causes display of the one or more portions of SVF supplier source data 110 on an interactive SVF dashboard 402.

FIG(s). 5A-B and 6 illustrate operations of an apparatus, computer-implemented method, and computer program product according to some example embodiments. It will be understood that each operation of the flowchart or diagram, and combinations of operations in the flowchart or diagram, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may comprise one or more memory devices storing instructions executable by a processor. In some example embodiments, the computer program instructions of the computer program product(s) which embody the procedures described above may be stored by memory devices of a plurality of computing devices.

As will be appreciated, any such computer program product may be loaded onto a computer or other programmable apparatus to produce a machine, such that the computer program product including the instructions which execute on the computer or other programmable apparatus creates means for implementing the functions specified in the flowchart block(s). Furthermore, the computer program product may comprise one or more computer-readable memories on which the computer program instructions may be stored such that the one or more computer-readable memories can direct a computer or other programmable apparatus to function in a particular manner, such that the computer program product may comprise an article of manufacture which implements the function specified in the flowchart block(s). The computer program instructions of one or more computer program products may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

## Claims

1. A computer-implemented method, the computer-implemented method comprising:
requesting one or more portions of sustainable vehicle fuel (SVF) supplier source data (110) from one or more SVF suppliers (108);
aggregating the one or more portions of SVF supplier source data (110);
receiving a request to display a current SVF availability, wherein the request to display the current SVF availability is associated with a user profile associated with a vehicle, wherein the request to display the current SVF availability comprises one or more portions of data related to a trip plan;
in response to receiving the request to display the current SVF availability:
causing rendering of the current SVF availability via an interactive SVF dashboard (402), wherein the current SVF availability is based at least in part on the one or more portions of SVF supplier source data (110);
receiving a request to schedule an SVF fueling reservation, wherein the request to schedule the SVF fueling reservation is associated with the user profile associated with the vehicle;
in response to receiving the request to schedule the SVF fueling reservation:
causing transmission of one or more portions of data related to the request to schedule the SVF fueling reservation to one or more computing devices associated with a respective SVF supplier of the one or more SVF suppliers;
receiving a confirmation of the SVF fueling reservation from the respective SVF supplier of the one or more SVF suppliers; and
causing rendering of the confirmation of the SVF fueling reservation via the interactive SVF dashboard (402);
generating one or more portions of user profile data associated with the user profile associated with the vehicle, wherein the one or more portions of user profile data comprise data related to at least one of a user search history related to one or more searches executed via the interactive SVF dashboard (402), a user purchase history associated with one or more purchases of SVF made by the user profile, a user trip history associated with one or more prior trip plans executed by the user profile;
causing storage of at least the user purchase history associated with the one or more portions of user profile data in a blockchain-enabled datastore;
determining, via an SVF optimization model (118), a suggested SVF mixing ratio, wherein the suggested SVF mixing ratio is generated based in part on the trip plan and the one or more portions of user profile data;
determining, via the SVF optimization model (118), a suggested travel hub offering SVF at a lowest cost relative to one or more alternative travel hubs offering SVF, wherein the suggested travel hub is determined based in part on the trip plan and the one or more portions of user profile data;
determining, via the SVF optimization model (118) and based in part on the one or more portions of user profile data, at least one of a carbon offset or a carbon credit associated with the user profile; and
causing rendering of least one of the suggested SVF mixing ratio, the suggested travel hub, the at least one of the carbon offset or the carbon credit, or the one or more portions of user profile data via the interactive SVF dashboard (402).

2. The computer-implemented method of Claim 1, wherein aggregating the one or more portions of SVF supplier source data (110) comprises:
parsing at least one of one or more Extensible Markup Language (XML) documents, one or more application programming interface data query results, one or more spreadsheets, or one or more emails associated with the one or more SVF suppliers

3. The computer-implemented method of Claim 2, wherein aggregating the one or more portions of SVF supplier source data (110) comprises:
configuring the one or more portions of SVF supplier source data (110) to be displayed via the interactive SVF dashboard (402), wherein the interactive SVF dashboard (402) is associated with a respective electronic display associated with one or more user computing devices (104).

4. The computer-implemented method of Claim 1, wherein the request to display the current SVF availability is generated based on an interaction with the interactive SVF dashboard (402).

5. The computer-implemented method of Claim 1, wherein the current SVF availability comprises data related to at least one of one or more available SVF types associated with the one or more respective SVF suppliers located at one or more travel hubs associated with the trip plan, one or more SVF quantities associated with the one or more respective available SVF types, a current price associated with the one or more respective available SVF types, an SVF mixing ratio associated with the one or more respective available SVF types, or logistical information related to the one or more respective travel hubs associated with the trip plan.

6. The computer-implemented method of Claim 1, wherein the request to schedule the SVF fueling reservation is based in part on the current SVF availability, and wherein the request to schedule the SVF fueling reservation is generated based on an interaction with the interactive SVF dashboard (402)

7. The computer-implemented method of Claim 1, wherein the one or more searches executed via the interactive SVF dashboard (402) are related to SVF.

8. The computer-implemented method of Claim 1, wherein the user purchase history comprises data related to at least one of one or more purchased SVF quantities, one or more purchased SVF types, one or more purchased SVF mixing ratios, one or more previously patronized SVF suppliers, or one or more previously visited travel hubs associated with the one or more previously patronized SVF suppliers.

9. The computer-implemented method of Claim 1, wherein the user trip history comprises data related to at least one of one or more trip routes taken during execution of the one or more prior trip plans, one or more SVP types used during the execution of the one or more prior trip plans, or one or more SVF mixing ratios used during the execution of the one or more prior trip plans.

10. The computer-implemented method of Claim 1, wherein the suggested SVF mixing ratio is based in part on at least one of an emissions optimization, a cost optimization, or a vehicle efficiency optimization.

11. The computer-implemented method of Claim 1, wherein the at least one of the carbon offset or the carbon credit are associated with a measurable amount of carbon emissions removed from atmosphere by using one or more purchased SVF quantities in the vehicle.

12. The computer-implemented method of Claim 1, the computer-implemented method further comprising:
generating, based at least in part on the one or more portions of SVF supplier source data (110), one or more notifications related to one or more SVF offers associated with the one or more SVF suppliers.

13. The computer-implemented method of Claim 12, the computer-implemented method further comprising:
causing transmission of the one or more notifications to one or more user computing devices (104) associated with the user profile associated with the vehicle.

14. The computer-implemented method of Claim 1, the computer-implemented method further comprising:
causing publication of the at least one of the carbon offset or the carbon credit associated with the user profile.

15. The computer-implemented method of Claim 1, wherein determining the at least one of the carbon offset or the carbon credit comprises verifying the user purchase history stored on the blockchain-enabled datastore.

## Patentansprüche

1. Computerimplementiertes Verfahren, das computerimplementierte Verfahren umfassend:
Anfordern eines oder mehrerer Abschnitte von Quellendaten (110) bezüglich Lieferanten von nachhaltigem Fahrzeug-Kraftstoff (Sustainable Vehicle Fuel, SVF) von einem oder mehreren SVF-Lieferanten (108);
Aggregieren des einen oder der mehreren Abschnitte von SVF-Lieferanten-Quellendaten (110);
Empfangen einer Anforderung zum Anzeigen einer momentanen SVF-Verfügbarkeit, wobei die Anforderung zum Anzeigen der momentanen SVF-Verfügbarkeit mit einem Nutzerprofil verknüpft ist, welches mit einem Fahrzeug verknüpft ist, wobei die Anforderung zum Anzeigen der momentanen SVF-Verfügbarkeit einen oder mehrere Abschnitte von Daten umfasst, die sich auf einen Tourenplan beziehen;
als Reaktion auf das Empfangen der Anforderung zum Anzeigen der momentanen SVF-Verfügbarkeit:
Veranlassen des Darstellens der momentanen SVF-Verfügbarkeit über ein interaktives SVF-Dashboard (402), wobei die momentane SVF-Verfügbarkeit mindestens teilweise auf dem einen oder den mehreren Abschnitten der SVF-Lieferanten-Quellendaten (110) basiert;
Empfangen einer Anforderung zum Disponieren einer SVF-Betankungsreservierung, wobei die Anforderung zum Disponieren der SVF-Betankungsreservierung mit dem Nutzerprofil verknüpft ist, das mit dem Fahrzeug verknüpft ist;
als Reaktion auf das Empfangen der Anforderung zum Disponieren der SVF-Betankungsreservierung:
Veranlassen einer Übertragung eines oder mehrerer Abschnitte von Daten, die sich auf die Anforderung zum Disponieren der SVF-Betankungsreservierung beziehen, an eine oder mehrere Rechenvorrichtungen, die mit einem jeweiligen SVF-Lieferanten des einen oder der mehreren SVF-Lieferanten verknüpft sind;
Empfangen einer Bestätigung der SVF-Betankungsreservierung von dem jeweiligen SVF-Lieferanten des einen oder der mehreren SVF-Lieferanten; und
Veranlassen des Darstellens der Bestätigung der SVF-Betankungsreservierung über das interaktive SVF-Dashboard (402);
Generieren eines oder mehrerer Abschnitte von Nutzerprofildaten, die mit dem Nutzerprofil verknüpft sind, das mit dem Fahrzeug verknüpft ist, wobei der eine oder die mehreren Abschnitte von Nutzerprofildaten Daten umfassen, die sich beziehen auf mindestens eines von einem Nutzersuchverlauf in Bezug auf eine oder mehrere Suchen, die über das interaktive SVF-Dashboard (402) ausgeführt wurden, einem Nutzereinkaufsverlauf, der mit einem oder mehreren Einkäufen von SVF verknüpft ist, die durch das Nutzerprofil getätigt wurden, und einem Nutzertourenverlauf, der mit einem oder mehreren früheren Tourenplänen verknüpft ist, die durch das Nutzerprofil ausgeführt wurden;
Veranlassen der Speicherung mindestens des Nutzereinkaufsverlaufs, der mit dem einen oder den mehreren Abschnitten von Nutzerprofildaten verknüpft ist, in einem Blockchain-befähigten Datenspeicher;
Bestimmen, über ein SVF-Optimierungsmodell (118), eines vorgeschlagenen SVF-Mischungsverhältnisses, wobei das vorgeschlagene SVF-Mischungsverhältnis teilweise auf der Grundlage des Tourenplans und des einen oder der mehreren Abschnitte von Nutzerprofildaten generiert wird;
Bestimmen, über das SVF-Optimierungsmodell (118), eines vorgeschlagenen Verkehrsknotenpunktes, der SVF zu den niedrigsten Kosten relativ zu einem oder mehreren alternativen Verkehrsknotenpunkten, die SVF anbieten, anbietet, wobei der vorgeschlagene Verkehrsknotenpunkt teilweise auf der Grundlage des Tourenplans und des einen oder der mehreren Abschnitte von Nutzerprofildaten bestimmt wird;
Bestimmen, über das SVF-Optimierungsmodell (118) und teilweise auf der Grundlage des einen oder der mehreren Abschnitte von Nutzerprofildaten, mindestens eines von einem CO₂-Ausgleich oder einer CO₂-Gutschrift, die mit dem Nutzerprofil verknüpft sind; und
Veranlassen des Darstellens mindestens eines von dem vorgeschlagenen SVF-Mischungsverhältnis, dem vorgeschlagenen Verkehrsknotenpunkt, dem mindestens einen von dem CO₂-Ausgleich oder der CO₂-Gutschrift oder des einen oder der mehreren Abschnitte von Nutzerprofildaten über das interaktive SVF-Dashboard (402).

2. Computerimplementiertes Verfahren nach Anspruch 1, wobei das Aggregieren des einen oder der mehreren Abschnitte von SVF-Lieferanten-Quellendaten (110) umfasst:
Analysieren mindestens eines von einem oder mehreren Extensible-Markup-Language(XML)-Dokumenten, einem oder mehreren Anwendungsprogrammierschnittstellen-Datenabfrageergebnissen, einem oder mehreren Tabellenkalkulationsblättern oder einer oder mehreren E-Mails, die mit dem einen oder den mehreren SVF-Lieferanten verknüpft sind.

3. Computerimplementiertes Verfahren nach Anspruch 2, wobei das Aggregieren des einen oder der mehreren Abschnitte von SVF-Lieferanten-Quellendaten (110) umfasst:
Konfigurieren des einen oder der mehreren Abschnitte von SVF-Lieferanten-Quellendaten (110) zum Anzeigen über das interaktive SVF-Dashboard (402), wobei das interaktive SVF-Dashboard (402) mit einer jeweiligen elektronischen Anzeige verknüpft ist, die mit einer oder mehreren Nutzer-Rechenvorrichtungen (104) verknüpft ist.

4. Computerimplementiertes Verfahren nach Anspruch 1, wobei die Anforderung zum Anzeigen der momentanen SVF-Verfügbarkeit auf der Grundlage einer Interaktion mit dem interaktiven SVF-Dashboard (402) generiert wird.

5. Computerimplementiertes Verfahren nach Anspruch 1, wobei die momentane SVF-Verfügbarkeit Daten umfasst, die sich auf mindestens eines beziehen von einem oder mehreren verfügbaren SVF-Typen, die mit dem einen oder den mehreren jeweiligen SVF-Lieferanten verknüpft sind, die sich an einem oder mehreren Verkehrsknotenpunkten, die mit dem Tourenplan verknüpft sind, befinden, einer oder mehreren SVF-Mengen, die mit dem einen oder den mehreren jeweiligen verfügbaren SVF-Typen verknüpft sind, einem momentanen Preis, der mit dem einen oder den mehreren jeweiligen verfügbaren SVF-Typen verknüpft ist, einem SVF-Mischungsverhältnis, das mit dem einen oder den mehreren jeweiligen verfügbaren SVF-Typen verknüpft ist, oder logistischen Informationen, die sich auf den einen oder die mehreren jeweiligen Verkehrsknotenpunkte beziehen, die mit dem Tourenplan verknüpft sind.

6. Computerimplementiertes Verfahren nach Anspruch 1, wobei die Anforderung zum Disponieren der SVF-Betankungsreservierung teilweise auf der momentanen SVF-Verfügbarkeit basiert und wobei die Anforderung zum Disponieren der SVF-Betankungsreservierung auf der Grundlage einer Interaktion mit dem interaktiven SVF-Dashboard (402) generiert wird.

7. Computerimplementiertes Verfahren nach Anspruch 1, wobei sich die eine oder die mehreren über das interaktive SVF-Dashboard (402) ausgeführten Suchen auf SVF beziehen.

8. Computerimplementiertes Verfahren nach Anspruch 1, wobei der Nutzereinkaufsverlauf Daten umfasst, die sich auf mindestens eines beziehen von einer oder mehreren gekauften SVF-Mengen, einem oder mehreren gekauften SVF-Typen, einem oder mehreren gekauften SVF-Mischungsverhältnissen, einem oder mehreren zuvor in Anspruch genommenen SVF-Lieferanten oder einem oder mehreren zuvor besuchten Verkehrsknotenpunkten, die mit dem einen oder den mehreren zuvor in Anspruch genommenen SVF-Lieferanten verknüpft sind.

9. Computerimplementiertes Verfahren nach Anspruch 1, wobei der Nutzertourenverlauf Daten umfasst, die sich auf mindestens eines beziehen von einer oder mehreren Tourenrouten, die während der Ausführung des einen oder der mehreren früheren Tourenpläne befahren wurden, einem oder mehreren SVP-Typen, die während der Ausführung des einen oder der mehreren früheren Tourenpläne verwendet wurden, oder einem oder mehreren SVF-Mischungsverhältnissen, die während der Ausführung des einen oder der mehreren früheren Tourenpläne verwendet wurden.

10. Computerimplementiertes Verfahren nach Anspruch 1, wobei das vorgeschlagene SVF-Mischungsverhältnis teilweise auf mindestens einem von einer Emissionsoptimierung, einer Kostenoptimierung oder einer Fahrzeugeffizienzoptimierung basiert.

11. Computerimplementiertes Verfahren nach Anspruch 1, wobei das mindestens eine von dem CO₂-Ausgleich oder der CO₂-Gutschrift mit einem messbaren Betrag von CO₂-Emissionen verknüpft ist, die durch die Verwendung einer oder mehrerer gekaufter SVF-Mengen in dem Fahrzeug aus der Atmosphäre entfernt wurden.

12. Computerimplementiertes Verfahren nach Anspruch 1, das computerimplementierte Verfahren ferner umfassend:
Generieren, mindestens teilweise auf der Grundlage des einen oder der mehreren Abschnitte von SVF-Lieferanten-Quellendaten (110), einer oder mehrerer Benachrichtigungen, die sich auf ein oder mehrere SVF-Angebote beziehen, die mit dem einen oder den mehreren SVF-Lieferanten verknüpft sind.

13. Computerimplementiertes Verfahren nach Anspruch 12, das computerimplementierte Verfahren ferner umfassend:
Veranlassen einer Übertragung der einen oder der mehreren Benachrichtigungen an eine oder mehrere Nutzer-Rechenvorrichtungen (104), die mit dem Nutzerprofil verknüpft sind, das mit dem Fahrzeug verknüpft ist.

14. Computerimplementiertes Verfahren nach Anspruch 1, das computerimplementierte Verfahren ferner umfassend:
Veranlassen einer Veröffentlichung des mindestens einen von dem CO₂-Ausgleich oder der CO₂-Gutschrift, das mit dem Nutzerprofil verknüpft ist.

15. Computerimplementiertes Verfahren nach Anspruch 1, wobei das Bestimmen des mindestens einen von dem CO₂-Ausgleich oder der CO₂-Gutschrift das Verifizieren des Nutzereinkaufsverlaufs, der in dem Blockchain-befähigten Datenspeicher gespeichert ist, umfasst.

## Revendications

1. Procédé mis en œuvre par ordinateur, le procédé mis en œuvre par ordinateur comprenant :
la demande d'une ou plusieurs portions de données sources de fournisseur de carburant durable pour véhicule (SVF) (110) auprès d'un ou plusieurs fournisseurs de SVF (108) ;
l'agrégation desdites une ou plusieurs portions de données sources de fournisseur de SVF (110) ;
la réception d'une demande d'affichage d'une disponibilité actuelle de SVF, dans laquelle la demande d'affichage de la disponibilité actuelle de SVF est associée à un profil utilisateur associé à un véhicule, dans laquelle la demande d'affichage de la disponibilité actuelle de SVF comprend une ou plusieurs portions de données relatives à un plan de trajet ;
en réponse à la réception de la demande d'affichage de la disponibilité actuelle de SVF :
le fait de provoquer le rendu de la disponibilité actuelle de SVF par l'intermédiaire d'un tableau de bord interactif de SVF (402), dans laquelle la disponibilité actuelle de SVF est basée au moins en partie sur lesdites une ou plusieurs portions de données sources de fournisseur de SVF (110) ;
la réception d'une demande de planification d'une réservation de ravitaillement en SVF, dans laquelle la demande de planification de la réservation de ravitaillement en SVF est associée au profil utilisateur associé au véhicule ;
en réponse à la réception de la demande de planification de la réservation de ravitaillement en SVF :
le fait de provoquer la transmission d'une ou plusieurs portions de données relatives à la demande de planification de la réservation de ravitaillement en SVF à un ou plusieurs dispositifs informatiques associés à un fournisseur de SVF respectif desdits un ou plusieurs fournisseurs de SVF ;
la réception d'une confirmation de la réservation de ravitaillement en SVF en provenance du fournisseur de SVF respectif parmi lesdits un ou plusieurs fournisseurs de SVF ; et
le fait de provoquer le rendu de la confirmation de la réservation de ravitaillement en SVF par l'intermédiaire du tableau de bord interactif de SVF (402) ;
la génération d'une ou plusieurs portions de données de profil utilisateur associées au profil utilisateur associé au véhicule, dans lesquelles lesdites une ou plusieurs portions de données de profil utilisateur comprennent des données relatives à au moins l'un parmi un historique de recherche utilisateur relatif à une ou plusieurs recherches exécutées par l'intermédiaire du tableau de bord interactif de SVF (402), un historique d'achat utilisateur associé à un ou plusieurs achats de SVF effectués par le profil utilisateur, un historique de trajet utilisateur associé à un ou plusieurs plans de trajet antérieurs exécutés par le profil utilisateur ;
le fait de provoquer le stockage d'au moins l'historique d'achat utilisateur associé auxdites une ou plusieurs portions de données de profil utilisateur dans un magasin de données compatible avec une blockchain ;
la détermination, par l'intermédiaire d'un modèle d'optimisation de SVF (118), d'un rapport de mélange de SVF suggéré, dans lequel le rapport de mélange de SVF suggéré est généré sur la base, en partie, du plan de trajet et desdites une ou plusieurs portions de données de profil utilisateur ;
la détermination, par l'intermédiaire du modèle d'optimisation de SVF (118), d'un pôle de transport suggéré offrant du SVF au coût le plus bas par rapport à un ou plusieurs pôles de transport alternatifs offrant du SVF, dans lequel le pôle de transport suggéré est déterminé sur la base, en partie, du plan de trajet et desdites une ou plusieurs portions de données de profil utilisateur ;
la détermination, par l'intermédiaire du modèle d'optimisation de SVF (118) et sur la base, en partie, desdites une ou plusieurs portions de données de profil utilisateur, d'au moins l'un parmi une compensation carbone ou un crédit carbone associé au profil utilisateur ; et
le fait de provoquer le rendu d'au moins l'un parmi le rapport de mélange de SVF suggéré, le pôle de transport suggéré, ledit au moins un parmi la compensation carbone ou le crédit carbone, ou lesdites une ou plusieurs portions de données de profil utilisateur par l'intermédiaire du tableau de bord interactif de SVF (402).

2. Procédé mis en œuvre par ordinateur de la revendication 1, dans lequel l'agrégation desdites une ou plusieurs portions de données sources de fournisseur de SVF (110) comprend :
l'analyse d'au moins l'un parmi un ou plusieurs documents en langage de balisage extensible (XML), un ou plusieurs résultats de requêtes de données d'interface de programmation d'application, une ou plusieurs feuilles de calcul, ou un ou plusieurs e-mails associés auxdits un ou plusieurs fournisseurs de SVF.

3. Procédé mis en œuvre par ordinateur de la revendication 2, dans lequel l'agrégation desdites une ou plusieurs portions de données sources de fournisseur de SVF (110) comprend :
la configuration desdites une ou plusieurs portions de données sources de fournisseur de SVF (110) pour être affichées par l'intermédiaire du tableau de bord interactif de SVF (402), dans lequel le tableau de bord interactif de SVF (402) est associé à un affichage électronique respectif associé à un ou plusieurs dispositifs informatiques utilisateur (104).

4. Procédé mis en œuvre par ordinateur de la revendication 1, dans lequel la demande d'affichage de la disponibilité actuelle de SVF est générée sur la base d'une interaction avec le tableau de bord interactif de SVF (402).

5. Procédé mis en œuvre par ordinateur de la revendication 1, dans lequel la disponibilité actuelle de SVF comprend des données relatives à au moins l'un parmi un ou plusieurs types de SVF disponibles associés auxdits un ou plusieurs fournisseurs de SVF respectifs situés au niveau d'un ou plusieurs pôles de transport associés au plan de trajet, une ou plusieurs quantités de SVF associées auxdits un ou plusieurs types de SVF disponibles respectifs, un prix actuel associé auxdits un ou plusieurs types de SVF disponibles respectifs, un rapport de mélange de SVF associé auxdits un ou plusieurs types de SVF disponibles respectifs, ou des informations logistiques relatives auxdits un ou plusieurs pôles de transport respectifs associés au plan de trajet.

6. Procédé mis en œuvre par ordinateur de la revendication 1, dans lequel la demande de planification de la réservation de ravitaillement en SVF est basée en partie sur la disponibilité actuelle de SVF, et dans lequel la demande de planification de la réservation de ravitaillement en SVF est générée sur la base d'une interaction avec le tableau de bord interactif de SVF (402).

7. Procédé mis en œuvre par ordinateur de la revendication 1, dans lequel lesdites une ou plusieurs recherches exécutées par l'intermédiaire du tableau de bord interactif de SVF (402) sont relatives au SVF.

8. Procédé mis en œuvre par ordinateur de la revendication 1, dans lequel l'historique d'achat utilisateur comprend des données relatives à au moins l'un parmi une ou plusieurs quantités de SVF achetées, un ou plusieurs types de SVF achetés, un ou plusieurs rapports de mélange de SVF achetés, un ou plusieurs fournisseurs de SVF auxquels il a été fait appel antérieurement, ou un ou plusieurs pôles de transport précédemment visités associés auxdits un ou plusieurs fournisseurs de SVF auxquels il a été fait appel antérieurement.

9. Procédé mis en œuvre par ordinateur de la revendication 1, dans lequel l'historique de trajet utilisateur comprend des données relatives à au moins l'un parmi un ou plusieurs itinéraires de trajet empruntés pendant l'exécution desdits un ou plusieurs plans de trajet antérieurs, un ou plusieurs types de SVP utilisés pendant l'exécution desdits un ou plusieurs plans de trajet antérieurs, ou un ou plusieurs rapports de mélange de SVF utilisés pendant l'exécution desdits un ou plusieurs plans de trajet antérieurs.

10. Procédé mis en œuvre par ordinateur de la revendication 1, dans lequel le rapport de mélange de SVF suggéré est basé en partie sur au moins l'une parmi une optimisation des émissions, une optimisation des coûts, ou une optimisation de l'efficacité du véhicule.

11. Procédé mis en œuvre par ordinateur de la revendication 1, dans lequel ledit au moins un parmi la compensation carbone ou le crédit carbone est associé à une quantité mesurable d'émissions de carbone retirées de l'atmosphère par l'utilisation d'une ou plusieurs quantités de SVF achetées dans le véhicule.

12. Procédé mis en œuvre par ordinateur de la revendication 1, le procédé mis en œuvre par ordinateur comprenant en outre :
la génération, sur la base au moins en partie desdites une ou plusieurs portions de données sources de fournisseur de SVF (110), d'une ou plusieurs notifications relatives à une ou plusieurs offres de SVF associées auxdits un ou plusieurs fournisseurs de SVF.

13. Procédé mis en œuvre par ordinateur de la revendication 12, le procédé mis en œuvre par ordinateur comprenant en outre :
le fait de provoquer la transmission desdites une ou plusieurs notifications à un ou plusieurs dispositifs informatiques utilisateur (104) associés au profil utilisateur associé au véhicule.

14. Procédé mis en œuvre par ordinateur de la revendication 1, le procédé mis en œuvre par ordinateur comprenant en outre :
le fait de provoquer la publication dudit au moins un parmi la compensation carbone ou le crédit carbone associé au profil utilisateur.

15. Procédé mis en œuvre par ordinateur de la revendication 1, dans lequel la détermination dudit au moins un parmi la compensation carbone ou le crédit carbone comprend la vérification de l'historique d'achat utilisateur stocké sur le magasin de données compatible avec une blockchain.
